# EUROPEAN PATENT APPLICATION

(11) **EP 4 546 844 A1**
(43) Date of publication of application: **30.04.2025**
(21) Application number: 22948108.0
(22) Date of filing: 28.11.2022
(51) Int. Cl.: H04W 12/106, G01S 19/42, H04W 4/40, H04W 64/00

(54) **METHOD FOR FIRST DEVICE TRANSMITTING REQUEST MESSAGE IN WIRELESS COMMUNICATION SYSTEM, AND DEVICE THEREFOR**

(30) Priority: 24.06.2022 KR 20220077842
(71) Applicant: LG Electronics Inc., Yeongdeungpo-gu Seoul 07336 (KR)
(72) Inventor: KIM, Myoungseob, Seoul 06772 (KR); SEO, Hanbyul, Seoul 06772 (KR); KIM, Hakseong, Seoul 06772 (KR)
(74) Representative: Mooser, Sebastian Thomas
(86) International application number: PCT/KR2022/018938
(87) International publication number: WO 2023/249175

(57) **Abstract**

Disclosed, according to various embodiments, are a method for a first device transmitting a request message in a wireless communication system, and a device therefor. Disclosed are a method and a device therefor, the method comprising the steps of: receiving, from a first UE, a first UE message including first location information; acquiring second location information for the first UE; transmitting a request message to the first UE; and receiving a response message as a response to the request message, wherein the request message is transmitted on the basis of a mismatch between the second location information and the first location information, and is for requesting transmission of the response message which includes information related to a specific number of satellite identifiers, the specific number being determined on the basis of a first distance between the first location information and the second location information.

## Description

### TECHNICAL FIELD

The present disclosure relates to a method by which a first device transmits a request message requesting transmission of satellite information for verification of received location information in a wireless communication system and device therefor.

### BACKGROUND

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multi carrier frequency division multiple access (MC-FDMA) system.

A sidelink (SL) refers to a communication method in which a direct link is established between user equipment (UE), and voice or data is directly exchanged between terminals without going through a base station (BS). SL is being considered as one way to solve the burden of the base station due to the rapidly increasing data traffic.

V2X (vehicle-to-everything) refers to a communication technology that exchanges information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive Machine Type Communication (MTC), and Ultra-Reliable and Low Latency Communication (URLLC) may be referred to as new radio access technology (RAT) or new radio (NR). Even in NR, vehicle-to-everything (V2X) communication may be supported.

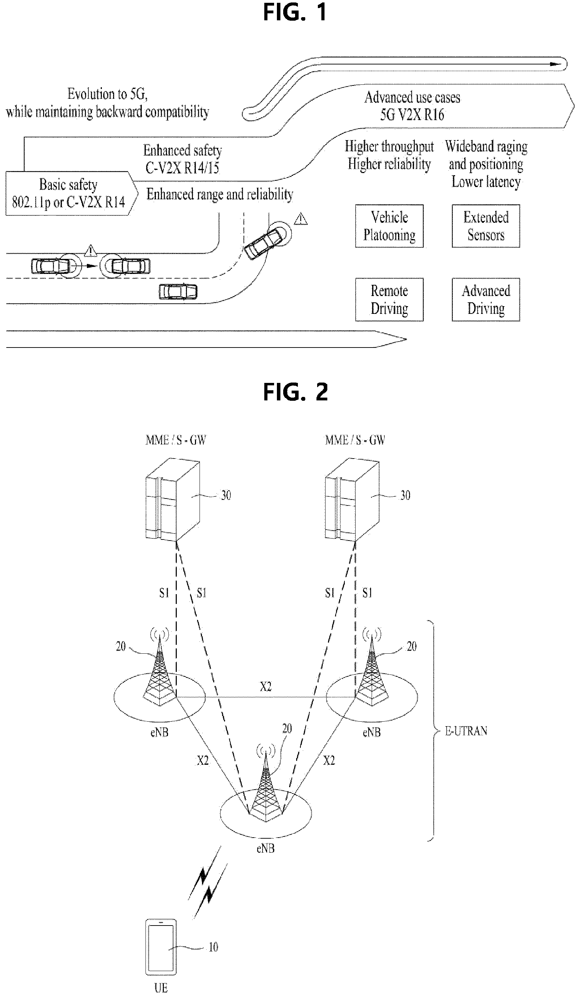

FIG. 1 is a diagram comparing RAT-based V2X communication before NR with NR-based V2X communication.

Regarding V2X communication, in RAT prior to NR, a scheme for providing a safety service based on V2X messages such as a basic safety message (BSM), a cooperative awareness message (CAM), and a decentralized environmental notification message (DENM) was mainly discussed. The V2X message may include location information, dynamic information, and attribute information. For example, the UE may transmit a periodic message type CAM and/or an event triggered message type DENM to another UE.

For example, the CAM may include dynamic state information about a vehicle such as direction and speed, vehicle static data such as dimensions, and basic vehicle information such as external lighting conditions and route details. For example, a UE may broadcast the CAM, and the CAM latency may be less than 100 ms. For example, when an unexpected situation such as a breakdown of the vehicle or an accident occurs, the UE may generate a DENM and transmit the same to another UE. For example, all vehicles within the transmission coverage of the UE may receive the CAM and/or DENM. In this case, the DENM may have a higher priority than the CAM.

Regarding V2X communication, various V2X scenarios have been subsequently introduced in NR. For example, the various V2X scenarios may include vehicle platooning, advanced driving, extended sensors, and remote driving.

For example, based on vehicle platooning, vehicles may dynamically form a group and move together. For example, to perform platoon operations based on vehicle platooning, vehicles belonging to the group may receive periodic data from a leading vehicle. For example, the vehicles belonging to the group may reduce or increase the distance between the vehicles based on the periodic data.

For example, based on advanced driving, a vehicle may be semi-automated or fully automated. For example, each vehicle may adjust trajectories or maneuvers based on data acquired from local sensors of nearby vehicles and/or nearby logical entities. Also, for example, each vehicle may share driving intention with nearby vehicles.

For example, on the basis of extended sensors, raw data or processed data acquired through local sensors, or live video data may be exchanged between a vehicle, a logical entity, UEs of pedestrians and/or a V2X application server. Thus, for example, the vehicle may recognize an environment that is improved over an environment that may be detected using its own sensor.

For example, for a person who cannot drive or a remote vehicle located in a dangerous environment, a remote driver or V2X application may operate or control the remote vehicle based on remote driving. For example, when a route is predictable as in the case of public transportation, cloud computing-based driving may be used to operate or control the remote vehicle. For example, access to a cloud-based back-end service platform may be considered for remote driving.

A method to specify service requirements for various V2X scenarios such as vehicle platooning, advanced driving, extended sensors, and remote driving is being discussed in the NR-based V2X communication field.

### DISCLOSURE

### TECHNICAL PROBLEM

The present disclosure aims to provide a method and apparatus for requesting satellite information on satellite identifiers, which are additional information to verify the forgery and/or manipulation of location information and quickly verifying the forgery and/or manipulation of the location information based on the satellite identifiers included in the received satellite information.

It will be appreciated by persons skilled in the art that the objects that could be achieved with the various embodiments of the present disclosure are not limited to what has been particularly described hereinabove and the above and other objects that the various embodiments of the present disclosure could achieve will be more clearly understood from the following detailed description.

### TECHNICAL SOLUTION

In an aspect of the present disclosure, provided herein is a method of transmitting a request message by a first device in a wireless communication system. The method may include: receiving a first user equipment (UE) message including first location information from a first UE; acquiring second location information on the first UE; transmitting the request message to the first UE; and receiving a response message in response to the request message. The request message may be transmitted based on configuration information including first configuration information on a sidelink signal or second configuration information on an uplink signal. The first configuration information may include information on a resource pool for transmitting and receiving the sidelink signal, a transmission power control parameter, and subchannels. The second configuration information may include information on a subcarrier spacing, a resource block size, a transmission power control parameter, and a frequency band. The request message may be transmitted based on an inconsistency between the first location information and the second location information, and the request message may request transmission of the response message including information on a specific number of satellite identifiers. The specific number may be determined based on a first distance between the first location information and the second location information.

The specific number may be determined as a first number or a second number based on the first distance and a preconfigured threshold distance.

Alternatively, the specific number may be determined as the first number based on that the first distance is smaller than the preconfigured threshold distance, and the specific number may be determined as the second number based on that the first distance is greater than or equal to the preconfigured threshold distance, where the first number is greater than the second number

Alternatively, the preconfigured threshold distance may be preconfigured based on at least one of a satellite coverage and a measurement error range of a global navigation satellite system (GNSS).

Alternatively, the second location information may be acquired based on first sensing information included in a second UE message transmitted by a second UE or GNSS raw measurement data included in a third UE message transmitted by the first UE.

Alternatively, the first device may verify whether the first location information is manipulated, depending on whether the satellite identifiers included in the response message match satellite identifiers observed based on the first location information.

Alternatively, the response message may further include a value related to GNSS raw measurement data.

Alternatively, the first device may verify whether the first location information is manipulated by further considering whether a position-velocity-time (PTV) value converted from the GNSS raw measurement data corresponds to the first location information.

Alternatively, the request message may be a common safety request (CSR) type of message.

In another aspect of the present disclosure, provided herein is a method of transmitting a message by a first UE in a wireless communication system. The method may include: selecting first transmission resources based on configuration information; transmitting a first UE message including first location information on the first transmission resources; receiving from a first device a request message requesting transmission of satellite information on a specific number of satellite identifiers; and transmitting a response message including the satellite information. The configuration information may include first configuration information on a sidelink signal or second configuration information on an uplink signal. The first configuration information may include information on a resource pool for transmitting and receiving the sidelink signal, a transmission power control parameter, and subchannels. The second configuration information may include information on a subcarrier spacing, a resource block size, a transmission power control parameter, and a frequency band. The specific number may be determined based on a first distance between the first location information and the second location information.

In another aspect of the present disclosure, provided herein is a first device configured to transmit a request message in a wireless communication system. The first device may include: a radio frequency (RF) transceiver; and a processor connected to the RF transceiver. The processor may be configured to: control the RF transceiver to receive a first UE message including first location information; receive a second UE message including second location information; determine the verification of second location information based on the first UE message and the second UE message; and transmit a request message requesting transmission of information on a specific number of satellite identifiers based on the verification determination of the second location information. The request message may be transmitted based on configuration information that includes first configuration information on a sidelink signal or second configuration information on an uplink signal. The first configuration information may include information on a resource pool for transmitting and receiving the sidelink signal, a transmission power control parameter, and subchannels. The second configuration information may include information on a subcarrier spacing, a resource block size, a transmission power control parameter, and a frequency band. The request message may be transmitted based on an inconsistency between the first location information and the second location information, and the request message may request transmission of a response message including information on the specific number of satellite IDs. The specific number may be determined based on a first distance between the first location information and the second location information.

In another aspect of the present disclosure, provided herein is a first UE configured to transmit a response message in a wireless communication system. The first UE may include: an RF transceiver; and a processor connected to the RF transceiver. The processor may be configured to: select first transmission resources based on configuration information; transmit a first UE message including first location information on the first transmission resources; receive from a first device a request message requesting transmission of satellite information on a specific number of satellite identifiers; and transmit a response message including the satellite information. The configuration information may include first configuration information on a sidelink signal or second configuration information on an uplink signal. The first configuration information may include information on a resource pool for transmitting and receiving the sidelink signal, a transmission power control parameter, and subchannels. The second configuration information may include information on a subcarrier spacing, a resource block size, a transmission power control parameter, and a frequency band. The specific number may be determined based on a first distance between the first location information and the second location information.

In another aspect of the present disclosure, provided herein is a chipset configured to transmit a request message in a wireless communication system. The chipset may include: at least one processor; and at least one memory operably connected to the at least one processor and configured to, when executed, cause the at least one processor to perform operations. The operations may include: receiving a first UE message including first location information from a first UE; acquiring second location information on the first UE; transmitting the request message to the first UE; and receiving a response message in response to the request message. The request message may be transmitted based on configuration information that includes first configuration information on a sidelink signal or second configuration information on an uplink signal. The first configuration information may include information on a resource pool for transmitting and receiving the sidelink signal, a transmission power control parameter, and subchannels. The second configuration information may include information on a subcarrier spacing, a resource block size, a transmission power control parameter, and a frequency band. The request message may be transmitted based on an inconsistency between the first location information and the second location information, and the request message may request transmission of a response message including information on the specific number of satellite IDs. The specific number may be determined based on a first distance between the first location information and the second location information.

In another aspect of the present disclosure, provided herein is a computer-readable storage medium including at least one computer program in a wireless communication system. The at least one computer program may be configured to cause at least one processor to perform operations for transmitting a request message, and the at least one computer program may be stored on the computer-readable storage medium. The operations may include: receiving a first UE message including first location information from a first UE; acquiring second location information on the first UE; transmitting the request message to the first UE; and receiving a response message in response to the request message. The request message may be transmitted based on configuration information that includes first configuration information on a sidelink signal or second configuration information on an uplink signal. The first configuration information may include information on a resource pool for transmitting and receiving the sidelink signal, a transmission power control parameter, and subchannels. The second configuration information may include information on a subcarrier spacing, a resource block size, a transmission power control parameter, and a frequency band. The request message may be transmitted based on an inconsistency between the first location information and the second location information, and the request message may request transmission of a response message including information on the specific number of satellite IDs. The specific number may be determined based on a first distance between the first location information and the second location information.

In a further aspect of the present disclosure, provided herein is a method of transmitting a request message by a first device in a wireless communication system. The method may include: receiving a first UE message including first location information from a first UE; acquiring second location information on the first UE; and transmitting the request message to the first UE. The request message may be transmitted based on configuration information including first configuration information on a sidelink signal or second configuration information on an uplink signal. The first configuration information may include information on a resource pool for transmitting and receiving the sidelink signal, a transmission power control parameter, and subchannels. The second configuration information may include information on a subcarrier spacing, a resource block size, a transmission power control parameter, and a frequency band. The second location information may be acquired based on satellite information related to the first location information provided by the first UE. An acquisition cycle of the second location information may be longer than a transmission cycle of the first UE message. The request message may be transmitted based on an inconsistency between the first location information and the second location information.

### ADVANTAGEOUS EFFECTS

According to various embodiments, satellite information on a satellite identifiers may be required as additional information to verify the forgery and/or manipulation of location information, thereby quickly verifying the forgery and/or manipulation of the location information based on the satellite identifier included in the delivered satellite information.

Additionally, by adjusting the number of satellite identifiers included in the satellite information based on a first distance between first location information and second location information, which are received, the data size of a verification message and/or signaling overhead thereof may be significantly reduced.

Additionally, the forgery and/or manipulation of location information may be quickly verified by requesting transmission of satellite information, thereby significantly improving the reliability of safety-related services provided based on the location.

Effects to be achieved by embodiment(s) are not limited to what has been particularly described hereinabove and other effects not mentioned herein will be more clearly understood by persons skilled in the art to which embodiment(s) pertain from the following detailed description.

### BRIEF DESCRIPTION OF THE DRAWINGS

The accompanying drawings, which are included to provide a further understanding of the disclosure and are incorporated in and constitute a part of this application, illustrate embodiments of the disclosure and together with the description serve to explain the principle of the disclosure.
FIG. 1 is a diagram for explaining a comparison between vehicle-to-everything (V2X) communication based on radio access technology (RAT) before New Radio (NR) and V2X communication based on NR.
FIG. 2 illustrates the structure of a Long-Term Evolution (LTE) system to which embodiment(s) are applicable.
FIG. 3 illustrates the structure of a NR system to which embodiment(s) are applicable.
FIG. 4 illustrates the structure of a NR radio frame to which embodiment(s) are applicable.
FIG. 5 illustrates the slot structure of a NR frame to which embodiment(s) are applicable.
FIG. 6 illustrates a radio protocol architecture for SL communication.
FIG. 7 illustrates user equipments (UEs) performing V2X or SL communication.
FIG. 8 illustrates resource units for V2X or SL communication.
FIG. 9 is a diagram for explaining an ITS station reference architecture.
FIG. 10 illustrates an exemplary structure of an ITS station that may be designed and applied based on a reference architecture.
FIG. 11 is a diagram for explaining a method of exchanging messages including location information between UEs.
FIGS. 12 and 13 are diagrams for explaining methods of obtaining location information by a UE based on a specific application (Android-based).
FIGS. 14 and 15 are diagrams for explaining methods of transmitting a second method.
FIGS. 16 and 17 are diagrams for explaining the structure of a request message that request transmission of a second message and the structure of the second message.
FIG. 18 is a diagram for explaining a method by which a first device verifies forge and manipulation of location information on a first UE.
FIG. 19 is a diagram for explaining a method by which a first UE transmits a message related to verification of location information to a first device.
FIG. 20 is a diagram for explaining a method for a second VRU UE to receive a first signal.
FIG. 21 illustrates a communication system applied to the present disclosure.
FIG. 22 illustrates wireless devices applicable to the present disclosure.
FIG. 23 illustrates another example of a wireless device to which the present disclosure is applied.

### DETAILED DESCRIPTION

The wireless communication system is a multiple access system that supports communication with multiple users by sharing available system resources (e.g., bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, a single carrier frequency (SC-FDMA) system, a multi carrier frequency division multiple access (MC-FDMA) system, and the like.

A sidelink refers to a communication scheme in which a direct link is established between user equipments (UEs) to directly exchange voice or data between UEs without assistance from a base station (BS). The sidelink is being considered as one way to address the burden on the BS caused by rapidly increasing data traffic.

Vehicle-to-everything (V2X) refers to a communication technology for exchanging information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive MTC, and Ultra-Reliable and Low Latency Communication (URLLC) may be referred to as new radio access technology (RAT) or new radio (NR). Even in NR, V2X communication may be supported.

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), etc. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA) etc. UTRA is a part of universal mobile telecommunications system (UMTS). 3GPP LTE is a part of Evolved UMTS (E-UMTS) using E-UTRA. 3GPP LTE employs OFDMA for downlink and SC-FDMA for uplink. LTE-A is an evolution of 3GPP LTE. 3GPP NR (New Radio or New Radio Access Technology) is an evolved version of 3GPP LTE/LTE-A/LTE-A pro.

5G NR is a successor technology of LTE-A and is a new clean-slate mobile communication system with characteristics such as high performance, low latency, and high availability. 5G NR may utilize all available spectrum resources, from low frequency bands below 1 GHz to intermediate frequency bands from 1 GHz to 10 GHz and high frequency (millimeter wave) bands above 24 GHz.

For clarity of explanation, LTE-A or 5G NR is mainly described, but the technical spirit of the embodiment(s) is not limited thereto

FIG. 2 illustrates the structure of an LTE system to which the present disclosure is applicable. This may also be called an evolved UMTS terrestrial radio access network (E-UTRAN) or LTE/LTE-A system.

Referring to FIG. 2, the E-UTRAN includes evolved Node Bs (eNBs) 20 which provide a control plane and a user plane to UEs 10. A UE 10 may be fixed or mobile, and may also be referred to as a mobile station (MS), user terminal (UT), subscriber station (SS), mobile terminal (MT), or wireless device. An eNB 20 is a fixed station communication with the UE 10 and may also be referred to as a base station (BS), a base transceiver system (BTS), or an access point.

eNBs 20 may be connected to each other via an X2 interface. An eNB 20 is connected to an evolved packet core (EPC) 39 via an S1 interface. More specifically, the eNB 20 is connected to a mobility management entity (MME) via an S1-MME interface and to a serving gateway (S-GW) via an S1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a UE and a network may be divided into Layer 1 (L1), Layer 2 (L2) and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

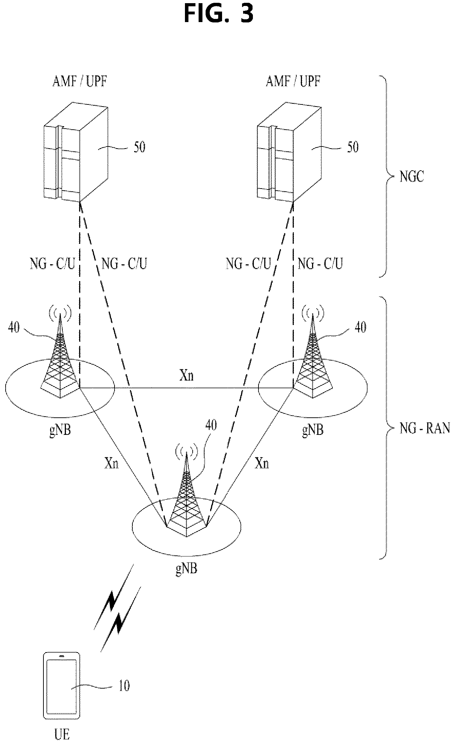

FIG. 3 illustrates the structure of a NR system to which the present disclosure is applicable.

Referring to FIG. 3, a next generation radio access network (NG-RAN) may include a next generation Node B (gNB) and/or an eNB, which provides user-plane and control-plane protocol termination to a UE. In FIG. 3, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

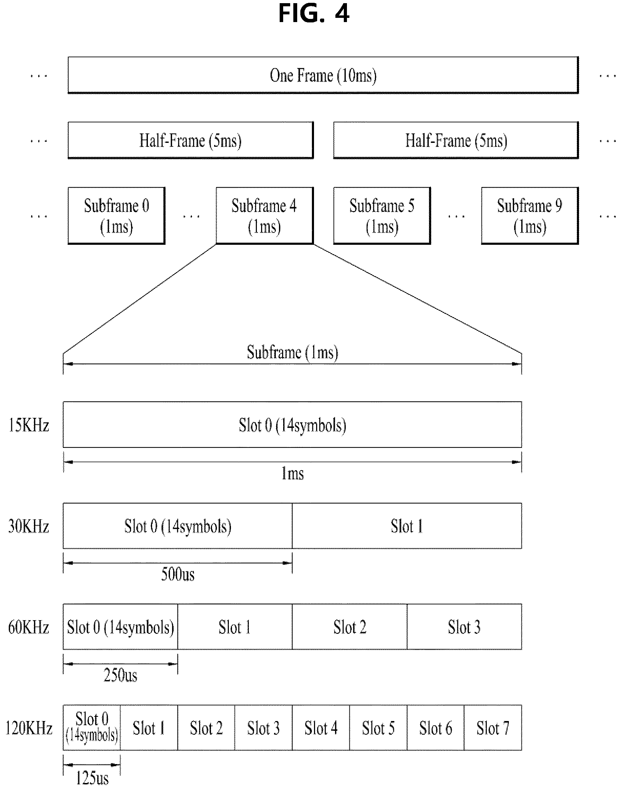

FIG. 4 illustrates the structure of a NR radio frame to which the present disclosure is applicable.

Referring to FIG. 4, a radio frame may be used for UL transmission and DL transmission in NR. A radio frame is 10 ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot N^{slot}_{symb}, the number of slots per frame N^{ftame,u}ₛₗₒₜ, and the number of slots per subframe N^{subftame,u}ₛₗₒₜ according to an SCS configuration µ in the NCP case.

**[Table 1]**

| SCS (15*2u) | N^{slot}_{symb} | N^{frame,u}ₛₗₒₜ | N^{subframe,u}ₛₗₒₜ |
|---|---|---|---|
| 15 kHz (u=0) | 14 | 10 | 1 |
| 30 kHz (u=1) | 14 | 20 | 2 |
| 60 kHz (u=2) | 14 | 40 | 4 |
| 120 kHz (u=3) | 14 | 80 | 8 |
| 240 kHz (u=4) | 14 | 160 | 16 |

Table 2 below lists the number of symbols per slot, the number of slots per frame, and the number of slots per subframe according to an SCS in the ECP case.

**[Table 2]**

| SCS (15*2^u) | Nslotsymb | Nframe,uslot | Nsubframe,uslot |
|---|---|---|---|
| 60 kHz (u=2) | 12 | 40 | 4 |

In the NR system, different OFDM(A) numerologies (e.g., SCSs, CP lengths, etc.) may be configured for a plurality of cells aggregated for one UE. Thus, the (absolute) duration of a time resource (e.g., SF, slot, or TTI) including the same number of symbols may differ between the aggregated cells (such a time resource is commonly referred to as a time unit (TU) for convenience of description).

In NR, multiple numerologies or SCSs to support various 5G services may be supported. For example, a wide area in conventional cellular bands may be supported when the SCS is 15 kHz, and a dense urban environment, lower latency, and a wider carrier bandwidth may be supported when the SCS is 30 kHz/60 kHz. When the SCS is 60 kHz or higher, a bandwidth wider than 24.25 GHz may be supported to overcome phase noise.

The NR frequency band may be defined as two types of frequency ranges. The two types of frequency ranges may be FR1 and FR2. The numerical values of the frequency ranges may be changed. For example, the two types of frequency ranges may be configured as shown in Table 3 below. Among the frequency ranges used in the NR system, FR1 may represent "sub 6 GHz range" and FR2 may represent "above 6 GHz range" and may be called millimeter wave (mmW).

**[Table 3]**

| Frequency Range designation | Corresponding frequency range | Subcarrier Spacing (SCS) |
|---|---|---|
| FR1 | 450 MHz - 6000 MHz | 15, 30, 60 kHz |
| FR2 | 24250 MHz - 52600 MHz | 60, 120, 240 kHz |

As mentioned above, the numerical values of the frequency ranges of the NR system may be changed. For example, FR1 may include a band of 410 MHz to 7125 MHz as shown in Table 4 below. That is, FR1 may include a frequency band of 6 GHz (or 5850 MHz, 5900 MHz, 5925 MHz, etc.) or higher. For example, the frequency band of 6 GHz (or 5850 MHz, 5900 MHz, 5925 MHz, etc.) or higher included in FR1 may include an unlicensed band. The unlicensed band may be used for various purposes, for example, for communication for vehicles (e.g., autonomous driving).

**[Table 4]**

| Frequency Range designation | Corresponding frequency range | Subcarrier Spacing (SCS) |
|---|---|---|
| FR1 | 410 MHz - 7125 MHz | 15, 30, 60 kHz |
| FR2 | 24250 MHz - 52600 MHz | 60, 120, 240 kHz |

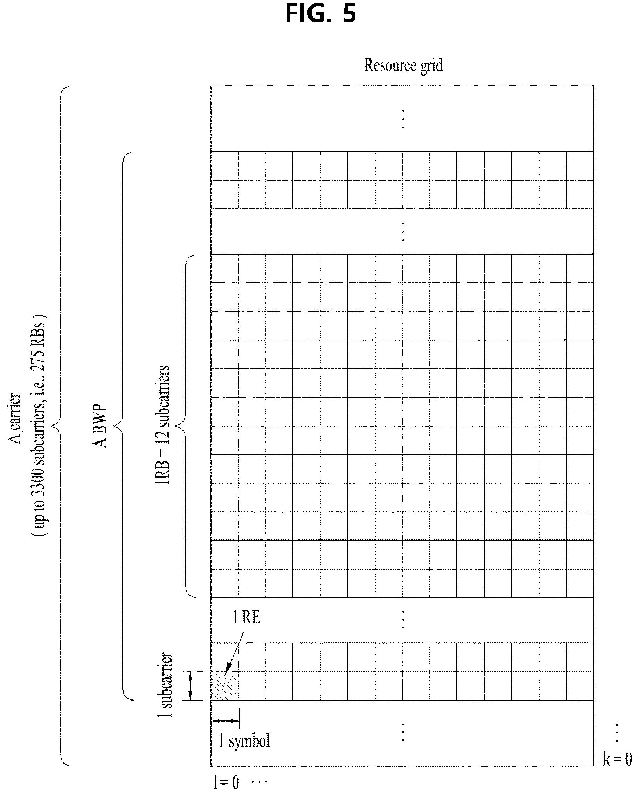

FIG. 5 illustrates the slot structure of a NR frame to which the present disclosure is applicable.

Referring to FIG. 5, one slot includes a plurality of symbols in the time domain. For example, one slot may include 14 symbols in a normal CP and 12 symbols in an extended CP. Alternatively, one slot may include 7 symbols in the normal CP and 6 symbols in the extended CP.

A carrier may include a plurality of subcarriers in the frequency domain. A resource block (RB) is defined as a plurality of consecutive subcarriers (e.g., 12 subcarriers) in the frequency domain. A bandwidth part (BWP) may be defined as a plurality of consecutive (P)RBs in the frequency domain, and the BWP may correspond to one numerology (e.g., SCS, CP length, etc.). The carrier may include up to N (e.g., 5) BWPs. Data communication may be conducted in an activated BWP. In a resource grid, each element may be referred to as a resource element (RE) and may be mapped to one complex symbol.

The wireless interface between UEs or the wireless interface between a UE and a network may be composed of an L1 layer, an L2 layer, and an L3 layer. In various embodiments of the present disclosure, the L1 layer may represent a physical layer. The L2 layer may represent, for example, at least one of a MAC layer, an RLC layer, a PDCP layer, and an SDAP layer. The L3 layer may represent, for example, an RRC layer.

Hereinafter, V2X or sidelink (SL) communication will be described.

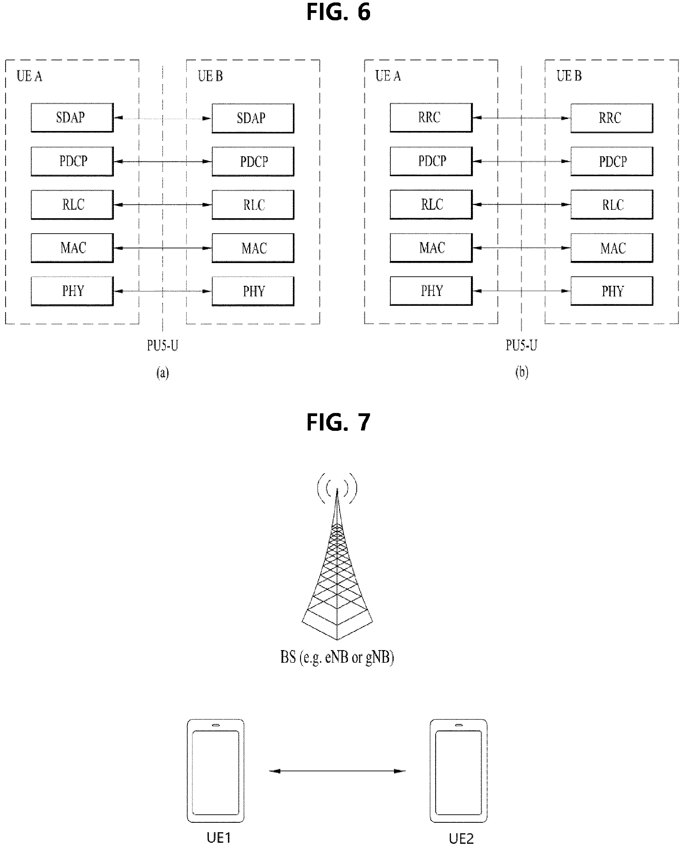

FIG. 6 illustrates a radio protocol architecture for SL communication. Specifically, FIG. 6-(a) shows a user plane protocol stack of NR, and FIG. 6-(b) shows a control plane protocol stack of NR.

Hereinafter, a sidelink synchronization signal (SLSS) and synchronization information will be described.

The SLSS is an SL-specific sequence, and may include a primary sidelink synchronization signal (PSSS) and a secondary sidelink synchronization signal (SSSS). The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, the UE may detect an initial signal and acquire synchronization using the S-PSS. For example, the UE may acquire detailed synchronization using the S-PSS and the S-SSS, and may detect a synchronization signal ID.

A physical sidelink broadcast channel (PSBCH) may be a (broadcast) channel on which basic (system) information that the UE needs to know first before transmission and reception of an SL signal is transmitted. For example, the basic information may include SLSS related information, a duplex mode (DM), time division duplex uplink/downlink (TDD UL/DL) configuration, resource pool related information, the type of an application related to the SLSS, a subframe offset, and broadcast information. For example, for evaluation of PSBCH performance, the payload size of PSBCH in NR V2X may be 56 bits including CRC of 24 bits.

The S-PSS, S-SSS, and PSBCH may be included in a block format (e.g., an SL synchronization signal (SS)/PSBCH block, hereinafter sidelink-synchronization signal block (S-SSB)) supporting periodic transmission. The S-SSB may have the same numerology (i.e., SCS and CP length) as a physical sidelink control channel (PSCCH)/physical sidelink shared channel (PSSCH) in the carrier, and the transmission bandwidth thereof may be within a (pre)set sidelink BWP (SL BWP). For example, the bandwidth of the S-SSB may be 11 resource blocks (RBs). For example, the PSBCH may span 11 RBs. The frequency position of the S-SSB may be (pre)set. Accordingly, the UE does not need to perform hypothesis detection at a frequency to discover the S-SSB in the carrier.

In the NR SL system, a plurality of numerologies having different SCSs and/or CP lengths may be supported. In this case, as the SCS increases, the length of the time resource in which the transmitting UE transmits the S-SSB may be shortened. Thereby, the coverage of the S-SSB may be narrowed. Accordingly, in order to guarantee the coverage of the S-SSB, the transmitting UE may transmit one or more S-SSBs to the receiving UE within one S-SSB transmission period according to the SCS. For example, the number of S-SSBs that the transmitting UE transmits to the receiving UE within one S-SSB transmission period may be pre-configured or configured for the transmitting UE. For example, the S-SSB transmission period may be 160 ms. For example, for all SCSs, the S-SSB transmission period of 160 ms may be supported.

For example, when the SCS is 15 kHz in FR1, the transmitting UE may transmit one or two S-SSBs to the receiving UE within one S-SSB transmission period. For example, when the SCS is 30 kHz in FR1, the transmitting UE may transmit one or two S-SSBs to the receiving UE within one S-SSB transmission period. For example, when the SCS is 60 kHz in FR1, the transmitting UE may transmit one, two, or four S-SSBs to the receiving UE within one S-SSB transmission period.

For example, when the SCS is 60 kHz in FR2, the transmitting UE may transmit 1, 2, 4, 8, 16 or 32 S-SSBs to the receiving UE within one S-SSB transmission period. For example, when SCS is 120 kHz in FR2, the transmitting UE may transmit 1, 2, 4, 8, 16, 32 or 64 S-SSBs to the receiving UE within one S-SSB transmission period.

When the SCS is 60 kHz, two types of CPs may be supported. In addition, the structure of the S-SSB transmitted from the transmitting UE to the receiving UE may depend on the CP type. For example, the CP type may be normal CP (NCP) or extended CP (ECP). Specifically, for example, when the CP type is NCP, the number of symbols to which the PSBCH is mapped in the S-SSB transmitted by the transmitting UE may be 9 or 8. On the other hand, for example, when the CP type is ECP, the number of symbols to which the PSBCH is mapped in the S-SSB transmitted by the transmitting UE may be 7 or 6. For example, the PSBCH may be mapped to the first symbol in the S-SSB transmitted by the transmitting UE. For example, upon receiving the S-SSB, the receiving UE may perform an automatic gain control (AGC) operation in the period of the first symbol for the S-SSB.

FIG. 7 illustrates UEs performing V2X or SL communication.

Referring to FIG. 7, in V2X or SL communication, the term UE may mainly refer to a user's UE. However, when network equipment such as a BS transmits and receives signals according to a communication scheme between UEs, the BS may also be regarded as a kind of UE. For example, UE 1 may be the first device 100, and UE 2 may be the second device 200.

For example, UE 1 may select a resource unit corresponding to a specific resource in a resource pool, which represents a set of resources. Then, UE 1 may transmit an SL signal through the resource unit. For example, UE 2, which is a receiving UE, may receive a configuration of a resource pool in which UE 1 may transmit a signal, and may detect a signal of UE 1 in the resource pool.

Here, when UE 1 is within the connection range of the BS, the BS may inform UE 1 of a resource pool. On the other hand, when the UE 1 is outside the connection range of the BS, another UE may inform UE 1 of the resource pool, or UE 1 may use a preconfigured resource pool.

In general, the resource pool may be composed of a plurality of resource units, and each UE may select one or multiple resource units and transmit an SL signal through the selected units.

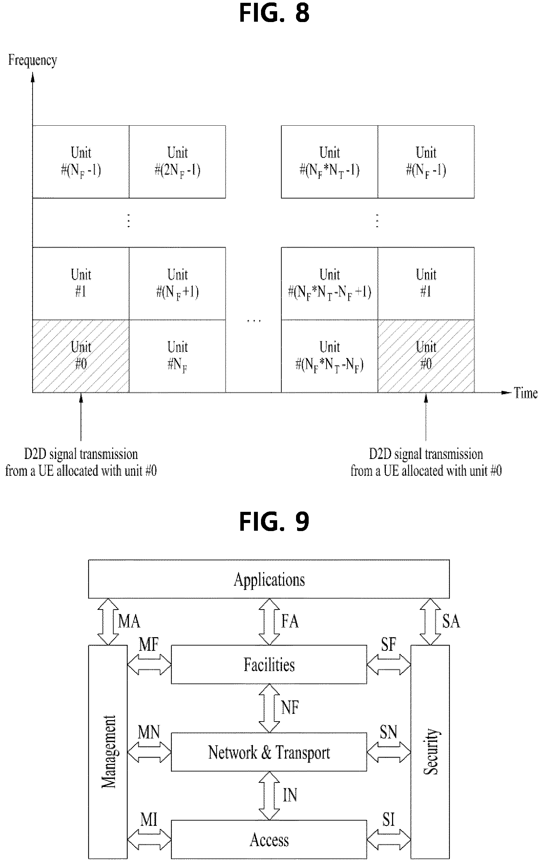

FIG. 8 illustrates resource units for V2X or SL communication.

Referring to FIG. 8, the frequency resources of a resource pool may be divided into NF sets, and the time resources of the resource pool may be divided into NT sets. Accordingly, a total of NF * NT resource units may be defined in the resource pool. FIG. 8 shows an exemplary case where the resource pool is repeated with a periodicity of NT subframes.

As shown in FIG. 8, one resource unit (e.g., Unit #0) may appear periodically and repeatedly. Alternatively, in order to obtain a diversity effect in the time or frequency dimension, an index of a physical resource unit to which one logical resource unit is mapped may change in a predetermined pattern over time. In this structure of resource units, the resource pool may represent a set of resource units available to a UE which intends to transmit an SL signal.

Resource pools may be subdivided into several types. For example, according to the content in the SL signal transmitted in each resource pool, the resource pools may be divided as follows.
(1) Scheduling assignment (SA) may be a signal including information such as a position of a resource through which a transmitting UE transmits an SL data channel, a modulation and coding scheme (MCS) or multiple input multiple output (MIMO) transmission scheme required for demodulation of other data channels, and timing advance (TA). The SA may be multiplexed with SL data and transmitted through the same resource unit. In this case, an SA resource pool may represent a resource pool in which SA is multiplexed with SL data and transmitted. The SA may be referred to as an SL control channel.
(2) SL data channel (physical sidelink shared channel (PSSCH)) may be a resource pool through which the transmitting UE transmits user data. When the SA and SL data are multiplexed and transmitted together in the same resource unit, only the SL data channel except for the SA information may be transmitted in the resource pool for the SL data channel. In other words, resource elements (REs) used to transmit the SA information in individual resource units in the SA resource pool may still be used to transmit the SL data in the resource pool of the SL data channel. For example, the transmitting UE may map the PSSCH to consecutive PRBs and transmit the same.
(3) The discovery channel may be a resource pool used for the transmitting UE to transmit information such as the ID thereof. Through this channel, the transmitting UE may allow a neighboring UE to discover the transmitting UE.

Even when the SL signals described above have the same content, they may use different resource pools according to the transmission/reception properties of the SL signals. For example, even when the SL data channel or discovery message is the same among the signals, it may be classified into different resource pools according to determination of the SL signal transmission timing (e.g., transmission at the reception time of the synchronization reference signal or transmission by applying a predetermined TA at the reception time), a resource allocation scheme (e.g., the BS designates individual signal transmission resources to individual transmitting UEs or individual transmission UEs select individual signal transmission resources within the resource pool), signal format (e.g., the number of symbols occupied by each SL signal in a subframe, or the number of subframes used for transmission of one SL signal), signal strength from a BS, the strength of transmit power of an SL UE, and the like.

### Vehicular Communications for ITS

An intelligent transport system (ITS) utilizing vehicle-to-everything (V2X) may mainly include an access layer, a network & transport layer, a facilities layer, an application layer, security and management entities, etc. Vehicle communication may be applied to various scenarios such as vehicle-to-vehicle communication (V2V), vehicle-to-network communication (V2N or N2V), vehicle-to-road side unit (RSU) communication (V2I or I2V), RSU-to-RSU communication (I2I), vehicle-to-pedestrian communication (V2P or P2V), and RSU-to-pedestrian communication (I2P or P2I). A vehicle, a BS, an RSU, a pedestrian, etc. as the subjects of vehicle communication are referred to as ITS stations.

FIG. 9 is a diagram for explaining an ITS station reference architecture.

The ITS station reference architecture may include an access layer, a network & transport layer, a facilities layer, entities for security and management, and an application layer at the top. Basically, the ITS station reference architecture follows a layered OSI model.

Specifically, features of the ITS station reference architecture based on the OSI model are illustrated in FIG. 9. The access layer of the ITS station corresponds to OSI layer 1 (physical layer) and layer 2 (data link layer), the network & transport layer of the ITS station corresponds to OSI layer 3 (network layer) and layer 4 (transport layer), and the facilities layer of the ITS station corresponds to OSI layer 5 (session layer), layer 6 (presentation layer), and layer 7 (application layer).

The application layer, which is located at the highest layer of the ITS station, may actually implement and support a use-case and may be selectively used according to the use-case. The management entity serves to manage all layers in addition to managing communication and operations of the ITS station. The security entity provides security services for all layers. Each layer of the ITS station exchanges data transmitted or received through vehicle communication and additional information for various purposes through an interface. The abbreviations of various interfaces are described below.
MA: Interface between management entity and application layer
MF: Interface between management entity and facilities layer
MN: Interface between management entity and networking & transport layer
MI: Interface between management entity and access layer
FA: Interface between facilities layer and ITS-S applications
NF: Interface between networking & transport layer and facilities layer
IN: Interface between access layer and networking & transport layer
SA: Interface between security entity and ITS-S applications
SF: Interface between security entity and facilities layer
SN: Interface between security entity and networking & transport layer
SI: Interface between security entity and access layer

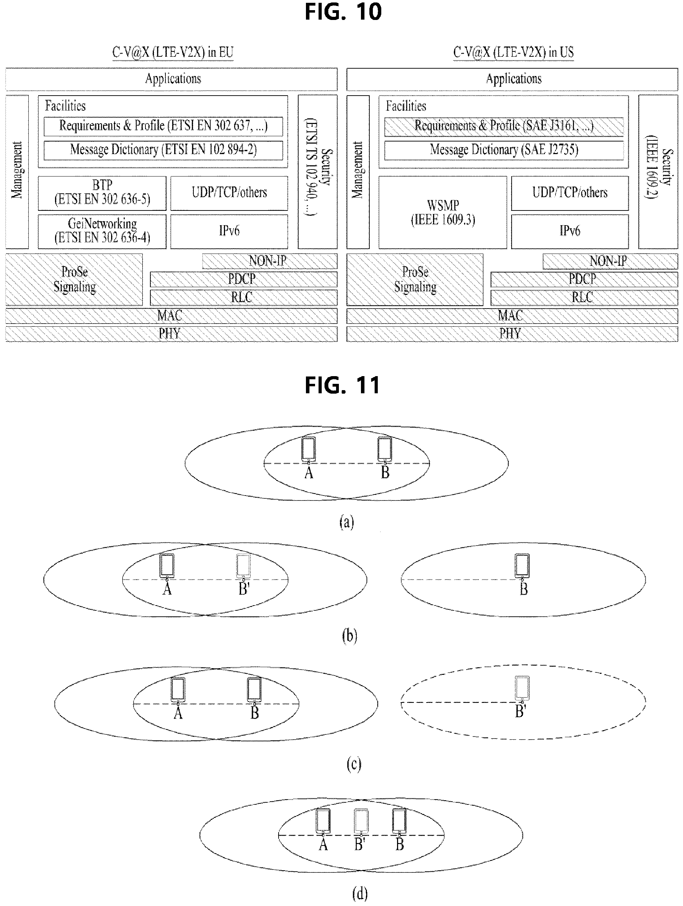

FIG. 10 illustrates an exemplary structure of an ITS station that may be designed and applied based on a reference architecture.

A main concept of the ITS station reference architecture is to allow each layer with a special function to process communication on a layer basis, between two end vehicles/users included in a communication network. That is, when a V2V message is generated, the data is passed through each layer downwards layer by layer in the vehicle and the ITS system (or other ITS-related UEs/systems), and a vehicle or ITS system (or other ITS-related UEs/systems) receiving the message passes the message upwards layer by layer.

The ITS system operating through vehicle communication and the network was organically designed in consideration of various access technologies, network protocols, communication interfaces, etc. to support various use-cases, and the roles and functions of each layer described below may be changed depending on a situation. The main functions of each layer will be briefly described.

The application later actually implements and supports various use-cases. For example, the application layer provides security, efficient traffic information, and other entertainment information.

The application layer controls an ITS station to which an application belongs in various manners or provides services by transferring a service message to an end vehicle/user/infrastructure through the access layer, the network & transport layer, and the facilities layer, which are lower layers of the application layer, by vehicle communication. In this case, the ITS application may support various use-cases. In general, these use-cases may be supported by grouping into other applications such as road-safety, traffic efficiency, local services, and infotainment. Application classification, use-cases, etc. may be updated when a new application scenario is defined. Layer management serves to manage and service information related to operation and security of the application layer, and the related information is transmitted and shared bidirectionally through an MA and an SA (or service access point (SAP), e.g. MA-SAP or SA-SAP). A request from the application layer to the facilities layer or a service message and related information from the facilities layer to the application layer may be delivered through an FA.

The facilities layer serves to support effective implementation of various use-cases defined in an application layer of a higher layer. For example, the facilities layer may perform application support, information support, and session/communication support.

The facilities layer basically supports the 3 higher layers of the OSI model, for example, a session layer, a presentation layer, and the application layer, and functions. Specifically, the facilities layer provides facilities such as application support, information support, and session/communication support, for the ITS. Here, the facilities mean components that provide functionality, information, and data.

The application support facilities support the operation of ITS applications (mainly generation of a message for the ITS, transmission and reception of the message to and from a lower layer, and management of the message). The application support facilities include a cooperative awareness (CA) basic service and a decentralized environmental notification (DEN) basic service. In the future, facilities entities for new services such as cooperative adaptive cruise control (CACC), platooning, a vulnerable roadside user (VRU), and a collective perception service (CPS), and related messages may be additionally defined.

The information support facilities provide common data information or a database to be used by various ITS applications and includes a local dynamic map (LDM).

The session/communication support facilities provide services for communications and session management and include an addressing mode and session support.

Facilities may be divided into common facilities and domain facilities.

The common facilities are facilities that provide common services or functions required for various ITS applications and ITS station operations, such as time management, position management, and service management.

The domain facilities are facilities that provide special services or functions required only for some (one or more) ITS applications, such as a DEN basic service for road hazard warning applications (RHW). The domain facilities are optional functions and are not used unless supported by the ITS station.

Layer management serves to manage and service information related to the operation and security of the facilities layer, and the related information is transmitted and shared bidirectionally through an MF and an SF (or MF-SAP and SF-SAP). The transfer of service messages and related information from the application layer to the facilities layer or from the facilities layer to the application layer is performed through an FA (or FA-SAP), and bidirectional service messages and related information between the facilities layer and the lower networking & transport layer are transmitted by an NF (or NF-SAP).

The network & transport layer servers to configure a network for vehicle communication between homogenous or heterogeneous networks through support of various transport protocols and network protocols. For example, the network & transport layer may provide Internet access, routing, and vehicle networking using Internet protocols such as TCP/UDP+IPv6 and form a vehicle network using a basic transport protocol (BTP) and GeoNetworking-based protocols. In this case, networking using geographic position information may also be supported. A vehicle network layer may be designed or configured depending on technology used for the access layer (access layer technology-independently) or regardless of the technology used for the access layer (access layer technology-independently or access layer technology agnostically).

Functionalities of the European ITS network & transport layer are as follows. Basically, functionalities of the ITS network & transport layer are similar to or identical to those of OSI layer 3 (network layer) and layer 4 (transport layer) and have the following characteristics.

The transport layer is a connection layer that delivers service messages and related information received from higher layers (the session layer, the presentation layer, and the application layer) and lower layers (the network layer, the data link layer, and the physical layer). The transport layer serves to manage data transmitted by an application of the ITS station so that the data accurately arrives at an application process of the ITS station as a destination. Transport protocols that may be considered in European ITS include, for example, TCP and UDP used as legacy Internet protocols as illustrated in FIG.11, and there are transport protocols only for the ITS, such as the BTS.

The network layer serves to determine a logical address and a packet forwarding method/path, and add information such as the logical address of a destination and the forwarding path/method to a header of the network layer in a packet received from the transport layer. As an example of the packet method, unicast, broadcast, and multicast between ITS stations may be considered. Various networking protocols for the ITS may be considered, such as GeoNetworking, IPv6 networking with mobility support, and IPv6 over GeoNetworking. In addition to simple packet transmission, the GeoNetworking protocol may apply various forwarding paths or transmission ranges, such as forwarding using position information about stations including vehicles or forwarding using the number of forwarding hops.

Layer management related to the network & transport layer serves to manage and provide information related to the operation and security of the network & transport layer, and the related information is transmitted and shared bidirectionally through an MN (or MN-SAP) and an SN (or SN-SAP). Transmission of bidirectional service messages and related information between the facilities layer and the networking & transport layer is performed by an NF (or NF-SAP), and service messages and related information between the networking & transport layer and the access layer are exchanged by an IN (or IN-SAP).

A North American ITS network & transport layer supports IPv6 and TCP/UDP to support existing IP data like Europe, and a wave short message protocol (WSMP) is defined as a protocol only for the ITS.

A packet structure of a wave short message (WSM) generated according to the WSMP includes a WSMP header and WSM data carrying a message. The WSMP header includes Version, PSID, WSMP header extension fields, WSM WAVE element ID, and Length.

Version is defined by a WsmpVersion field indicating an actual WSMP version of 4 bits and a reserved field of 4 bits. PSID is a provider service identifier, which is allocated according to an application in a higher layer and helps a receiver to determine an appropriate higher layer. Extension fields is a field for extending the WSMP header, and includes information such as a channel number, a data rate, and transmit power used. WSMP WAVE element ID specifies the type of a WSM to be transmitted. Length specifies the length of transmitted WSM data in octets through a WSMLength field of 12 bits, and the remaining 4 bits are reserved. LLC Header allows IP data and WSMP data to be transmitted separately and is distinguished by Ethertype of a SNAP. The structures of the LLC header and the SNAP header are defined in IEEE802.2. When IP data is transmitted, Ethertype is set to 0x86DD in the LLC header. When WSMP is transmitted, Ethertype is set to 0x88DC in the LLC header. The receiver identifies Ethertype. If Ethertype is 0x86DD, the receiver transmits upward the packet to an IP data path, and if Ethertype is 0x88DC, the receiver transmits upward the packet to a WSMP path.

The access layer serves to transmit a message or data received from a higher layer on a physical channel. As access layer technologies, ITS-G5 vehicle communication technology based on IEEE 802.11p, satellite/broadband wireless mobile communication technology, 2G/3G/4G (long-term evolution (LTE), etc.)/5G wireless cellular communication technology, cellular-V2X vehicle-dedicated communication technologies such as LTE-V2X and NR-V2X (new radio), broadband terrestrial digital broadcasting technology such as DVB-T/T2/ATSC3.0, and GPS technology may be applied.

A data link layer is a layer that converts a physical line between adjacent nodes (or between vehicles) with noise into a communication channel without transmission error, for use in the higher network layer. The data link layer performs a function of transmitting/delivering/forwarding L3 protocols, a framing function of dividing data to be transmitted into packets (or frames) as transmission units and grouping the packets, a flow control function of compensating for a speed difference between a transmitter and a receiver, and a function of (because there is a high probability that an error and noise occurs randomly in view of the nature of a physical transmission medium) detecting a transmission error and correcting the error or detecting a transmission error based on a timer and an ACK signal by a transmitter in a method such as automatic repeat request (ACK) and retransmitting a packet that has not been correctly received. In addition, to avoid confusion between packets or ACK signals, the data link layer performs a function of assigning a sequence number to the packets and the ACK signals, and a function of controlling establishment, maintenance, and disconnection of a data link between network entities, and data transmission between network entities. The main functions of logical link control (LLC), radio resource control (RRC), packet data convergence protocol (PDCP), radio link control (RLC), medium access control (MAC), and multi-channel operation (MCO) included in the data link layer of FIG. 11 will be described below.

An LLC sub-layer enables the use of different lower MAC sub-layer protocols, and thus enables communication regardless of network topology. An RRC sub-layer performs functions such as broadcasting of cell system information required for all UEs within a cell, management of delivery of paging messages, management (setup/maintenance/release) of RRC connection between a UE and an E-UTRAN, mobility management (handover), transmission of UE context between eNodeBs during handover, UE measurement reporting and control therefor, UE capability management, temporary assignment of a cell ID to a UE, security management including key management, and RRC message encryption. A PDCP sub-layer may perform functions such as IP packet header compression in a compression method such as robust header compression (ROHC), cyphering of a control message and user data, data integrity, and data loss prevention during handover. RLC sub-layer delivers a packet received from the higher PDCP layer in an allowed size of the MAC layer through packet segmentation/concatenation, increases data transmission reliability by transmission error and retransmission management, checks the order of received data, reorders data, and checks redundancy. A MAC sub-layer performs functions such as control of the occurrence of collision/contention between nodes for use of shared media among multiple nodes, matching a packet delivered from the higher layer to a physical layer frame format, assignment and identification of the address of the transmitter/receiver, detection of a carrier, collision detection, and detection of obstacles on the physical medium. An MCO sub-layer enables efficient provision of various services on a plurality of frequency channels. The main function of MCO sub-layer is to effectively distribute traffic load of a specific frequency channel to other channels to minimize collision/contention of communication information between vehicles in each frequency channel.

The physical layer is the lowest layer in the ITS layer architecture. The physical layer defines an interface between a node and a transmission medium and performs modulation, coding, and mapping of a transport channel to a physical channel, for bit transmission between data link layer entities and informs the MAC sub-layer of whether a wireless medium is busy or idle by carrier sensing or clear channel assessment (CCA).

A Soft V2X system may be a system in which a Soft V2X server receives a VRU message or a personal safety message (PSM) from a vulnerable road user (VRU) or a V2X vehicle and transfers information on a neighbor VRU or vehicle based on the VRU message or the PSM message or may analyze a road condition, etc. on which neighbor VRUs or vehicles move and may transmit a message informing a neighbor VRU or vehicle of a collision warning, etc. based on the analyzed information (e.g., through a downlink signal) via V2X communication using a UU interface. Here, the VRU message may be a message transmitted to the Soft V2X server through the UU interface, and may include mobility information about the VRU, such as a position, a movement direction, a movement path, and a speed of the VRU. That is, the Soft V2X system may use a method of receiving mobility information of VRUs and/or vehicles related to V2X communication through the UU interface and controlling a driving route or a VRU movement flow of the VRU, etc. based on the mobility information received by the Soft V2X server, such as a network. The Soft V2X system may be configured in relation to V2N communication.

User equipment or pedestrian equipment (VRU device) that is difficult to perform direct communication (PC5, dedicated short-range communications (DSRC)) related to V2X communication can provide or receive driving information and mobility information to nearby vehicles or VRUs through the Soft V2X system based on the UU interface. Through this, the user equipment or pedestrian equipment (VRU device) that is difficult to perform the direct communication (PC5, DSRC) can be protected from surrounding vehicles.

### Method of GNSS data transmission for verification of V2X message

FIG. 11 is a diagram for explaining a method of exchanging messages including location information between UEs.

In V2V communication, an in-vehicle UE may transmit information thereon to prevent accidents, ensure road safety, enable efficient driving, or perform pre-coordinated operations. In this case, each UE may transmit a message (UE message or first message) including mobility-related information such as location information, speed information derived from the location information, heading information in addition to basic identification information that enables other UEs or the network to recognize and track the corresponding UE.

Referring to FIG. 11(a), in the case of a PC5 interface that performs direct communication between UEs, since a first UE and a second UE (UE A and UE B) are within the transmission coverage of each other, the first UE and the second UE (UE A and UE B) may simply broadcast messages to sense each other and acquire information about one another. If the range of the transmission coverage is precisely determined, communication is not always seamless within the coverage, nor is it entirely impossible outside the coverage. For instance, the transmission coverage may be experimentally determined as a range where a certain level of transmission performance (e.g., target packet reception ratio = 90%) is ensured over various scenes in a specific environment.

Referring to FIG. 11(b), although the second UE (UE B) is not within the coverage of the first UE (UE A), the second UE (UE B) may alter its location information and transmit a message as if the second UE (UE B) were within the coverage of the first UE (UE A) (i.e., at the position of virtual UE B'). In this case, since the message from the second UE (UE B) is not received by the first UE (UE A), the alteration and manipulation of the location information by the second UE (UE B) may not affect the first UE (UE A).

Referring to FIG. 11(c), although the second UE (UE B) is within the coverage of the first UE (UE A), the second UE (UE B) may alter its location information and transmit a message as if the second UE (UE B) were outside the coverage of the first UE (UE A) (i.e., at the position of virtual UE B'). In this case, since the location information in the message is far from the (hazard) radius of the first UE (UE A), the first UE (UE A) may perform incorrect operations in safety-related service actions. In this case, the received signal strength (e.g., received signal strength indicator (RSSI)) of a signal transmitted by the second UE (UE B) may be above a certain level (since the signal is transmitted within the transmission radius). However, when considering the location information in the message transmitted by the second UE' (UE B') or the distance difference between the first UE (UE A) and the second UE' (UE B'), the values may not correspond (when comparing the received signal strength based on the transmission distance). Of course, referring to FIG. 11(b), when communication occurs within the radius of each other, if part of the location information of the second UE (UE B) is altered and transmitted, the first UE (UE A) may not be aware of the partial alteration of the location information using the aforementioned method. In this case, within the respective direct communication coverages, the UEs may detect the partial alteration (or errors) in the location information according to other direct methods. Alternatively, a related RSU or BS may detect the partial alteration (or errors) in the location information.

For UEs communicating via a cellular network rather than direct communication, it may be possible to communicate even when the peer UE is not within the respective transmission coverages. In this case, as in the scenarios shown in FIG. 11(b) and/or FIG. 11(c), manipulated location information (specifically, manipulated location information where the original data is replaced at the application layer) may be transmitted in a V2X message. In addition, compared to direct communication, it may be more challenging to detect errors based on characteristics such as a transmission coverage.

Therefore, to prevent the manipulation of the location information in such a cellular network environment, the first UE (or second UE), the RSU associated with the first UE, the BS, and/or related servers may require methods of detecting the manipulation of the location information. Specifically, a method of using geographical features based on the communication radius of the BS, a method of securing additional information required for verification, or a method of ensuring the authenticity of related original information in a forgery-resistant manner may be considered. In this case, a method of comparing information stored in devices/servers with information included in a message generated and transmitted by a (vehicle) UE and detecting any manipulation of location information in the (V2X) message, thereby detecting and preventing misbehavior caused by the manipulated location information may be required.

Hereinafter, specific methods of preventing manipulation of location information in a cellular network environment will be described. Although the discussion focuses on communication between vehicles, the proposed methods may also be applied to any entity capable of transmitting mobility information thereon, such as vehicles, motorcycles, bicycles, pedestrians, or robots. The mobility information may be provided through any device, such as an embedded system (e.g., on-board diagnostics (OBD)), a portable communication UE, or a dedicated communication device. Moreover, depending on the applicable embodiments and detailed methods, the communication may be performed via direct communication or cellular-based communication.

### (1) Misbehavior Detection

A specific UE (hereinafter referred to as a first UE) may transmit a specific message (i.e., first message) including specific information (e.g., first information). Additionally, the first UE may include separate information associated with the first information (hereinafter referred to as second information) in a separate message (second message) and transmit the information. In this case, a receiving device (e.g., second UE or first server) may compare the first message and the second message to detect errors in the first information or the second information. For example, if the receiving device suspects that forgery and manipulation occur in the first information transmitted by the first UE, the receiving device may compare the first information and the second information to verify or detect errors in the first or second information. Here, the suspicion of forgery or manipulation in the first information from the first UE may mean that the receiving device, which is receiving the first message including the first information, detects an inconsistency and suspects forgery and manipulation. For instance, the first information may include the location information on the first UE and/or related data (e.g., mobility information). The first UE may exploit the forgery or manipulation of the first information to gain undue benefits (e.g., unfairly acquiring location-based service benefits) or maliciously disrupt the traffic system.

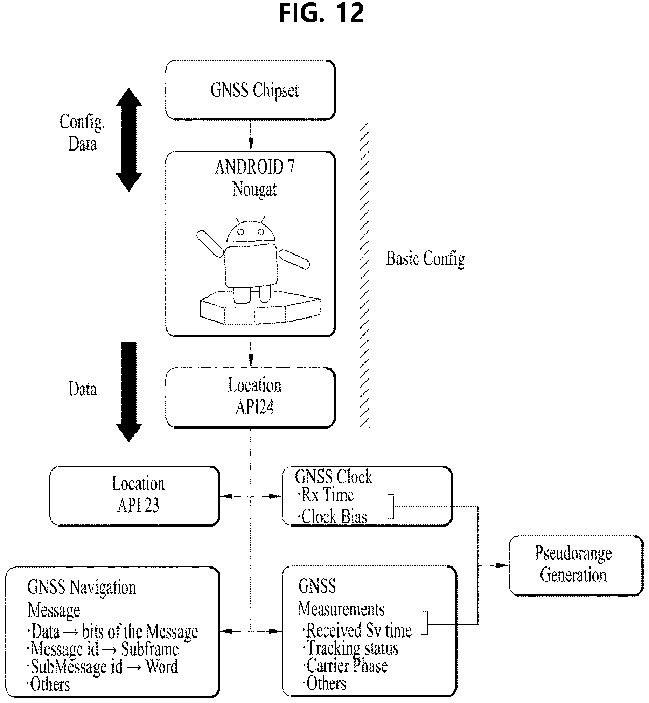

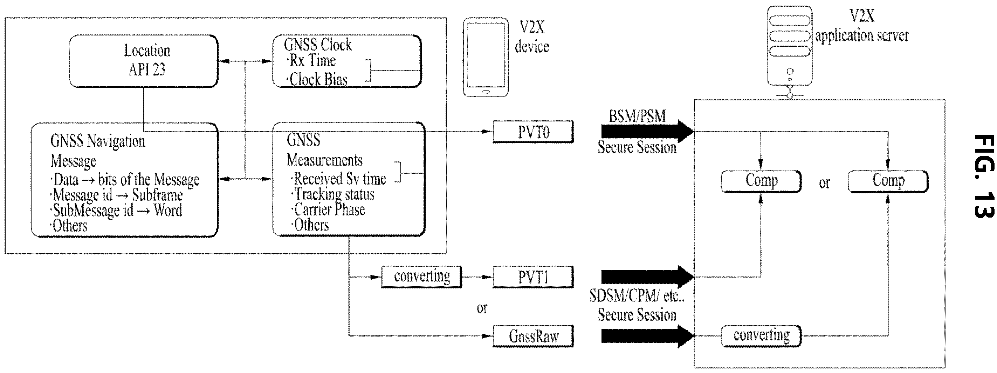

FIGS. 12 and 13 are diagrams for explaining methods of obtaining location information by a UE based on a specific application (Android-based).

Referring to FIG. 12, the specific application may support several application programming interfaces (APIs) related to the global navigation satellite system (GNSS). Among these APIs, the location-related API (e.g., android.location.Location class) may output position-velocity-time (PVT). Here, the information output from the PVT may include location information in rectangular coordinates, a velocity over a specific period, and/or a time at which this information is generated. The output information (or values) may be altered to arbitrary location information if the use of mock location applications is enabled in the developer options of the specific application. Since the developer options may be easily used even for purposes other than simulation or testing, the location information may be easily forged and manipulated. The forged or manipulated location information may also affect other applications via the API.

Additionally, the API (Android API) provided after a certain point (2016) may offer not only PVT-type location information but also GNSS raw measurement results (android.location.GnssMeasurement class). The GNSS raw measurement may include information on associated satellites and the observed measurement values between the satellites and the device, before the derivation of the corresponding PVT. For instance, the GNSS raw measurement may include a carrier frequency, carrier phase, satellite transmission time, and UE reception time. The GNSS raw measurement may represent raw measurement data before the calculation or derivation of the PVT values. Unlike the PVT information, the values included in the GNSS raw measurement may not be applied across the device (e.g., globally applied to applications) when altered by a specific application. Therefore, the GNSS raw measurement may be parameters or values that are more resistant to user forgery and manipulation, that is, parameters or values that provide more secure preservation.

### (2) Transmission of GNSS Raw Measurement

As described above, GNSS reception data may be converted into a PVT form via the API of a device to output the current location of the device in rectangular coordinates. However, this data may be easily manipulated or may include significant GNSS error values. In such cases, if the GNSS raw measurement values, which are another output of the API, is capable of being preserved, the GNSS raw measurement values may be used to verify the GNSS reception data that is converted into the PVT form.

In other words, to prevent the forgery or manipulation of information (e.g., location information) in the V2X message (or first message), it is necessary to separately store identical information, related information, or raw information in the device as described above. Alternatively, the information may need to be transmitted to nearby road users (user devices) or higher-level networks via a separate message (or second message), channel, resource, or interface.

For example, referring to FIG. 13, while PVT values corresponding to GNSS information are transmitted via a conventional V2X message (first message), values related to GNSS raw measurement data may be separately stored in a device such as a UE or OBD. Alternatively, the values related to GNSS raw measurement data may be transmitted to a V2X server via a separate message (second message), channel, resource, or interface. The UE may directly transmit GNSS raw data to a server (V2X application server), allowing the server to convert the GNSS raw data into a GNSS output value (PVT form), or the UE may convert the raw data into a GNSS output value (PVT form) itself and then transmit the GNSS output value to the server. The information (raw data or GNSS output value) may be transmitted via existing basic safety message formats such as a basic safety message (BSM) or a personal safety message (PSM). Alternatively, the information may be transmitted through a separate message such as a collective perception message (CPM) or a sensor data sharing message (SDSM).

In this case, the GNSS raw data may be input from the API into a signature function within a V2X security module, where the data is signed. To this end, a method of transmitting certificates, public keys, and signature data may be applied (i.e., applying a method essentially identical to that of conventional V2X messages). Compared to the method of transmitting only the first message, this method offers the advantage of reusing existing security features without additional modules. The method has advantages such as secure management (e.g., trust zone, hardware security module (HSM), etc.) to prevent basic hacking, thereby ensuring that the GNSS raw data is protected from forgery or manipulation. Referring again to FIG. 13, an application that generates and transmits a V2X message (e.g., BSM/PSM) by producing/acquiring PVT0 location information may differ from an application generates and transmits a V2X message (or another type of message) (e.g., second message) by acquiring GNSS raw data corresponding to PVT0. Therefore, different signing keys may be used for each application, allowing for the distribution of applications, generation of certificates, and each application may maintain an independent security state. In this case, during signature verification, if even one invalid signature is detected, it may be considered as an occurrence of inconsistency. The manipulation or forgery may be verified by comparing the first message and the second message or by using sensing/perception messages transmitted by other road users or messages observed by RSUs.

The second message may be transmitted according to specific configurations (e.g., transmission timing, frequency, resource, etc.) or upon a request from a specific UE, RSU, or server. The details of message transmission methods will be described later.

### (3) Transmission of Second Message

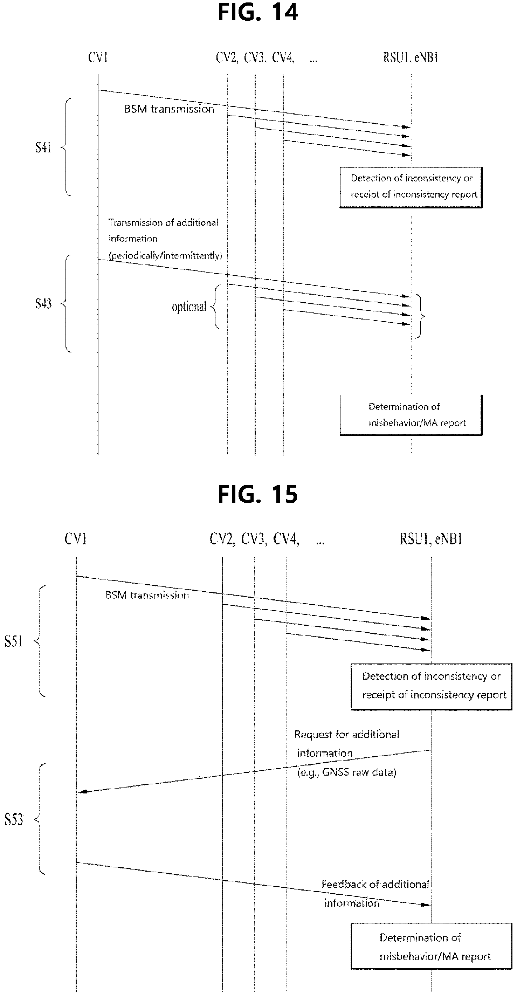

FIGS. 14 and 15 are diagrams for explaining methods of transmitting the second method described above.

Referring to FIG. 14, the UE may directly detect an inconsistency (S41) and periodically transmit additional information to the RSU/server (S43). Alternatively, referring to FIG. 15, when an inconsistency is detected, the RSU/server may periodically request the UE associated with the inconsistency to transmit additional information and receive the additional information as feedback (S53).

In this context, if the first message is transmitted with a first cycle (e.g., periodic transmission of a BSM at 100 ms and a PSM at 1000 ms) and within a time window of the first cycle at a specific offset time (first offset) on a first frequency resource, the second message may be transmitted based on the following parameters and related configurations.
- Transmission time of second message: The first message and the second message may be transmitted at the same time (i.e., at the time when the first offset is applied), or the second message may be transmitted after the first message. If transmitted at the same time, the generation times of the first message and the second message may also be identical or significantly similar. In this case, the likelihood of the second message being manipulated or forged may be further reduced. Alternatively, to reduce the likelihood of the manipulation or forgery, the transmission time of the second message may be determined such that the second message is transmitted on a transmission opportunity closest to the generation time of the second message, regardless of the transmission time of the first message. Additionally, the generation or transmission time of the second message may precede the generation time of the first message (or the derivation of a PVT value for location information).
- Transmission cycle of second message: If the transmission time of the second message coincides with that of the first message, the transmission cycle of the second message (i.e., second cycle) may be the same as or longer than the transmission cycle of the first message (i.e., first cycle). However, if the second cycle is shorter than the first cycle, it may cause significant overhead and thus may not be considered. The second cycle may be set to a value that allows for sufficient detection of potential errors in the first message. For example, if an error in the first message needs to be corrected within A seconds after the transmission time of the first message, the second cycle may be set to a value of A or less. More specifically, when the UE installed in a vehicle transmits both the first and second messages, error correction may need to occur within 4 seconds in consideration of the response time of a driver or user in the vehicle. In this case, the second cycle may be set to 4 seconds or less.
- Transmission frequency resources of second message: The transmission times and/or frequency resources of the first and second messages may differ. However, if the transmission times and frequency resources of the first and second messages are identical, the first and second messages may be transmitted in a concatenated/aggregated form. For example, depending on the transmission cycle (e.g., first cycle = 100 ms and second cycle = 1000 ms), the first and second messages may be transmitted simultaneously on the same resource at a specific time. In this case, the first and second messages may be transmitted in a concatenated/aggregated form. If the transmission times differ, the first message and/or the second message may be transmitted independently.

Alternatively, the first cycle of the first message may vary depending on the situation (e.g., the transmission frequency may change between 1 Hz and 10 Hz based on the speed of the UE), or the first message may not be transmitted according to the first cycle (e.g., depending on the availability of transmission resources or the status of channel occupancy). Even in such cases, the second message may be transmitted for verification purposes during the intervals between the transmissions of the first message. Therefore, in non-periodic (or variable/intermittent) transmissions, the second message may be transmitted once for every n transmissions of the first message (e.g., n=10). Here, the value of n, which represents the number of transmissions of the first message, may be predefined or indicated through physical channel signaling or higher-layer signaling. In this case, resources used for transmitting the second message may be separately specified or pre-associated with the transmission resources of the first message.

The aforementioned parameters/configurations may be applied commonly to all UEs or be applied in a UE-specific manner to prevent collisions and/or ensure efficient use of resources.

Alternatively, referring to FIG. 15, if the RSU and/or V2X server detects potential misbehavior (e.g., inconsistency) from the first message of a specific UE, the RSU and/or V2X server may request the transmission of the second message from the specific UE to detect/verify the misbehavior. In this case, the transmission time and resources for the second message may be specified by the RSU and/or V2X server upon requesting the transmission (e.g., via a control channel or scheduling assignment) or selected/assigned by the specific UE.

Hereinafter, the second message and a third message, which is used to request the second message will be described in detail.

### (4) Content of Message Related to Verification

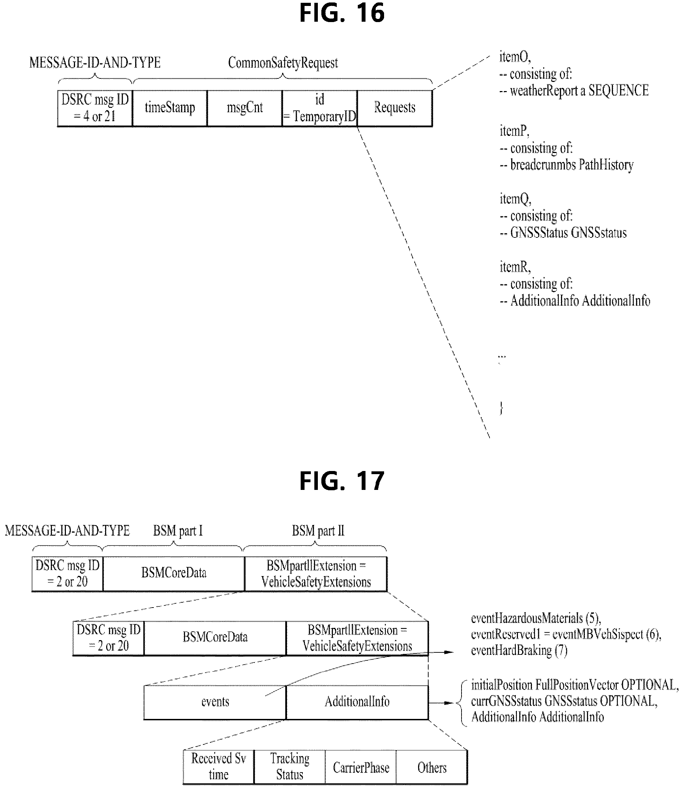

FIGS. 16 and 17 are diagrams for explaining the structure of a request message that request transmission of the second message and the structure of the second message.

A specific UE may broadcast the first message (or BSM) while moving. In this case, the RSU and/or V2X server may transmit a third message to the specific UE to request transmission of additional specific information based on specific reasons and/or events. The third message may be a type of existing V2X message or a message specifically defined for requesting the specific information. For example, the third message may be a common safety request (CSR) type of message that requests the specific UE to transmit the specific information via an existing BSM. Specifically, if an inconsistency related to the specific UE is detected, the RSU and/or V2X server may request the UE to transmit additional information via a CSR message. Alternatively, the RSU and/or V2X server may request the UE experiencing the inconsistency to transmit additional information on surrounding vehicles via the CSR message. In this case, the optional message part, which is additionally transmitted, is typically transmitted in the form of a VehicleSafetyExtensions data frame if the vehicle is not a special type.

The main optional message part of the VehicleSafetyExtensions data frame may include data elements such as VehicleEventFlags, path history, or path prediction. For example, a specific value within VehicleEventFlags may be designated to indicate a request for additional information (second message). For instance, a bit corresponding to eventReserved1 may be repurposed for use as eventMBVehSuspect (suspected misbehavior vehicle event), and the additional information (e.g., GNSS raw data) may be mapped and transmitted in another message field (second message). Alternatively, eventMBVehSuspect may be created as an additional or separate component, to expand the functionality of VehicleEventFlags.

For instance, fields designated for path history or path prediction may be used for the mapping of the surrounding vehicle information. When VehicleEventFlags is mapped to eventMBVehSuspect, the fields for path history or path prediction may not include information related to path history or path prediction. Instead, the fields for path history or path prediction may be identified as including the GNSS raw data of the UE or PVT values derived/converted from the GNSS raw data.

Referring to FIG. 16, the RSU and/or eNB may request a UE suspected of misbehavior or forge/manipulation to transmit additional information (or second message) via a CommonSafetyRequest type of V2X message (e.g., DSRC message) (i.e., DSRC message ID = 4 or 21). Here, the identifier (ID) of the target UE may be specified in the form of a temporary ID. However, if the CSR message is used only for requesting path history, additional items may be needed to indicate that the CSR message is a request for additional information. For instance, as shown in FIG. 16, among items corresponding to the Requests field, 'AdditionalInfo' related to feedback of the additional information such as GNSS raw measurement may be added as a new item.

Alternatively, even if the CSR message is used only for requesting path history, transmission may be performed as follows: the reference location value is set as the location information (PVT0) from the first message, the converted value of the GNSS raw data is set as the location information (PVT1) from the second message, and the error/offset value (PVT1 - PVT0) relative to the reference location (PVT0) is mapped as one-point path history for the same (specific) time. In this case, if the offset value is above a certain range (e.g., the representation range for the offset is 18 bits) or a predetermined error threshold (e.g., an error of 100 m), it may be recognized as an occurrence of an error or forge/manipulation and mapped as all zeros or all ones, etc.

Alternatively, high-precision (location) information is mapped to the first message, which is a mandatory message, while relatively lower-precision (location) information or specific reference information (that changes less frequently compared to the information in the first message) may be mapped to the second message, which is transmitted optionally. For example, the second message may include the ID of the RSU/eNB, location information values, or information on tiles/grids with a constant resolution.

Additionally, a BSM extension message (or second message) transmitted in response to the request may use the optional fields of an existing extension message as it is. Alternatively, the BSM extension message may be transmitted by modifying some of the optional fields or as a new type of extension message. For instance, referring to FIG. 17, the extension message (or second message) may include a VehicleSafetyExtensions component where an existing reserved event or a new event is added. Additionally, the contents added after the field related to the event (e.g., GNSS raw measurement or processed/converted information) may be included in a separate data element or data frame for AdditionalInfo.

In this case, the request message (or third message) may include the ID of the UE being requested to transmit the additional information, the type of additional information, and the generation time of the additional information (or the request time for the additional information). As described above, the request message may be a modified form of an existing V2X message or a separate request message such as a GNSSInfoRequest message. In this case, the second message may include information that the UE stores or buffers for a certain period, and thus, the transmission time of the second message may not necessarily match the generation time of the second information (or the additional information). Therefore, the second message may include additional information about the generation time of the second information. For example, referring to FIG. 17, a TimeStamp field may be added to AdditionalInfo or included in another field. If a GNSS signal is obtained at 1 Hz, the UE may acquire and store GNSS raw data at a sampling rate of 1/N Hz (e.g., when N=10, 1/N=0.1Hz).

Additionally, when the UE, RSU, or server requests the second message, the UE, RSU, or server may implicitly request the most recently obtained GNSS raw data. However, to obtain the most relevant and promptly processable valid (or accurate) information, a time duration related to the transmission of the second message (or the acquisition time of the additional information) may be designated or configured. For example, the time duration may be configured based on a specific time before or after (or prior to the request time) the time at which the inconsistency occurs or is detected. In this case, a generation time (timestamp) or time duration of the additional information requested by the third message may be determined based on the time duration. Upon receiving the third message, the UE may provide feedback with the second message that includes GNSS raw data obtained during or near the time duration among the acquired or stored GNSS raw data, along with information on a timestamp associated therewith.

In this case, if data related to GNSS raw (measurement) is included, it may not be necessary to transmit all the content of the GNSS raw data for the purpose of verifying forge/manipulation. For instance, if a large number of GNSS satellites applicable to positioning are observed, transmitting information on all GNSS satellites may result in an excessively large data size. Therefore, at a single transmission time, the second message may include information (e.g., tracking status) on only the minimum number of satellites required for positioning among all GNSS satellites. For example, information from only the top m satellites with the best reception performance among the n observed satellites may be included in the second message. In this case, during the next transmission time of the second message or at the k-th subsequent transmission time, information from the remaining (n-m) satellites may be included and transmitted in the second message. Alternatively, only the information from the top m satellites with the best reception performance among the remaining (n-m) satellites may be included in the second message. In other words, the information from the top m satellites with the best reception performance serves as primary information for verifying the first message. The information from the remaining (n-m) satellites (while positioning performance may be slightly lowered) may be used as secondary information for verifying the first message and/or the primary information. Although the second message is described in two forms, primary and secondary, the second message may be extended into more forms and methods depending on the usage environment, application, and specific requirements.

In addition to the periodic transmission of the second message, there may be a similar issue of increased data transmission volume when a specific UE transmits a fourth message in response to a request from the server or higher-level network (via the third message) (or when the specific UE aperiodically transmits the second message as requested). In this case, as described above, the fourth message may serve as information to verify whether the first message is forged or manipulated and thus include only information from some of the satellites. For example, the fourth message may include satellite information observed in relation to the positioning or measurement of the location information (or second location) included in the first message. Additionally/alternatively, the fourth message may include satellite information that is observable after the time when the location information (or second location) in the first message is measured.

Specifically, the server or higher-level network may obtain a first location from the first message transmitted by the specific UE and predict or determine the second location of the specific UE based on a message transmitted by another UE that includes sensing information on the specific UE. Alternatively, the server or higher-level network may acquire the second location through the location of the specific UE detected via a separate camera or other means. Alternatively, the server or higher-level network may obtain the second location related to the specific UE based on GNSS raw data included in a separate message (e.g., periodically transmitted second message) transmitted periodically in relation to the first message. The server or higher-level network may then determine whether there is an inconsistency between the first location and the second location. If an inconsistency is identified, the server or higher-level network may transmit the third message to the specific UE to request the transmission of the fourth message including satellite information.

Here, regarding the satellite information included in the fourth message, the closer the first location and the second location are, the more similar the satellite reception environment may be. In this case, the satellite information related to the first location and the satellite information related to the second location are likely to match. In such scenarios, satellite information on a larger number of satellites may be compared or requested. Conversely, if the first location and the second location are far apart, the likelihood of matching location information may be low because the satellite reception environments related to the first location and the second location are different from each other. Therefore, in such cases, the forge/manipulation of the first location may be verified by comparing information from the minimal relevant satellites.

More specifically, if the first location and the second location are significantly close (e.g., if the distance between the first location and the second location is smaller than or equal to a first threshold distance), the RSU and/or server may request the specific UE suspected of manipulation to report as many satellite IDs as possible. For example, the RSU and/or server may request the specific UE to report N1 (e.g., N1 = 4) satellite IDs. If the number of satellites observed or acquired by the specific UE is smaller than or equal to N1, the specific UE may report the IDs of all the satellites that the UE has observed or acquired. Here, the first threshold distance may correspond to an error value of GPS positioning or a certain proportion of the error value. For example, if the mean and/or root-mean-square (RMS) error value associated with GPS positioning is 10 m, the first threshold distance may be determined as 10 m or a specific multiple of 10 m (e.g., 100 m). In this case, the forge and manipulation of the first location may be verified through a comparison of all satellite information (or as much satellite information as possible) in the fourth message (and/or the second message). Here, the satellite information may include not only the satellite ID but also a GPS signal transmission time, carrier phase, propagation time, and/or carrier-to-noise ratio (C/N ratio).

Alternatively, if the distance between the first location and the second location is greater than or equal to the first threshold distance (or positioning error range) (e.g., if the distance is greater than or equal to the first threshold distance but smaller than a second threshold distance), the forge/manipulation of the specific UE (or the UE suspected of manipulation) may be verified even if the specific UE reports a large number of satellite IDs. For example, the RSU or the server may request the specific UE to report N2 satellite IDs (i.e., a smaller number than N1, e.g., N2 = 3). If the number of satellites that the specific UE may observe or acquire is smaller than N2, the specific UE may report all the satellite IDs the specific UE may observe or acquire. Here, the second threshold distance may be a value significantly exceeding the error value of GPS positioning while remaining within the satellite coverage (i.e., not changing to a different satellite due to UE movement). For example, if the satellite coverage is 50 km, the second threshold distance may be determined as 10 km.

Alternatively, if the distance between the first location and the second location exceeds the satellite coverage (e.g., if the distance is greater than or equal to the second threshold distance but smaller than the third threshold distance), the server and RSU may verify the manipulation of the first location even if the specific UE (suspected of manipulation) reports a small number of satellite IDs. For example, the RSU and/or server may request the specific UE to report N3 satellite IDs (e.g., N3 = 2) through the third message. If the number of satellites observable by the specific UE (in relation to the second location) is smaller than N3, the specific UE may report all observable satellite IDs. Here, the third threshold distance may be a value exceeding the satellite coverage. For example, if the satellite coverage is 50 km, the third threshold distance may have a value greater than 50 km (e.g., 100 km).

Alternatively, if the distance between the first location and the second location is on the scale of a city or country, far apart from each other (e.g., if the distance is greater than or equal to the third threshold distance), the manipulation of the first location may be verified even if the specific UE (or UE suspected of manipulation) reports just one specific satellite ID. For example, the RSU and/or server may request the specific UE to report N4 satellite IDs (e.g., N4 = 1) through the third message. In this case, the forge/manipulation of the first location may be verified solely by checking whether the satellite ID included in the fourth message matches a satellite ID related to the second location.

The method of determining the number of satellite IDs to be included in the satellite information based on the distance between the first location and the second location may be applied not only to the fourth message but also to the transmission of the second message.

Hereinafter, a method by which the first device verifies the forge and manipulation of the location information on the first UE according to the aforementioned method will be described in detail.

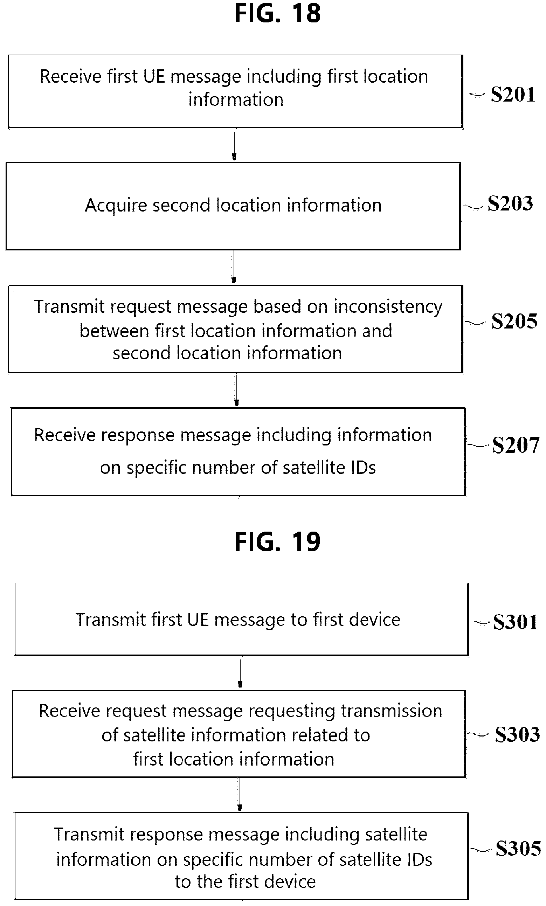

FIG. 18 is a diagram for explaining a method by which a first device verifies forge and manipulation of location information on a first UE.

Referring to FIG. 18, the first device may receive a first UE message from the first UE (S201). The first UE message may further include mobility information on the first UE. Here, the first UE message may correspond to the aforementioned first message.

Next, the first device may acquire second location information related to the first UE (S203). The second location information may be location information on the first UE detected based on a second UE message transmitted by a second UE, which is different from the first UE, or based on a sensing unit of the first device. For example, the second UE message may include sensing information about UEs located around the second UE, and the first device may detect the location information on the first UE based on the sensing information. Alternatively, the second location information may be obtained through a value calculated based on GNSS raw measurement data included in a message (or third UE message) periodically transmitted by the first UE in relation to verification. The acquisition cycle of the second location information may be longer than the transmission cycle of the first UE message. For example, the first device may acquire the second location information by receiving a separate UE message that includes the second location information, and the separate UE message may be transmitted at a longer cycle than the first UE message. By configuring the transmission cycle of such a separate UE message, the overhead caused by the transmission of the separate UE message may be minimized.

The first device may transmit a request message for verification of the first location information to the first UE if an inconsistency between the first location information and the second location information is detected (S203). For example, if the difference between the first location information and the second location information is greater than or equal to a preconfigured threshold, the first device may determine that there occurs an inconsistency between the first location information and the second location information.

Specifically, if an inconsistency occurs between the first location information and the second location information, the first device may transmit the request message to the first UE. In this case, the request message may be a message requesting the transmission of a response message that includes information about a specific number of satellite IDs for the verification of the first location information. Here, the specific number may be determined based on a first distance between the first location information and the second location information. For example, the first device may request information on fewer satellite IDs as the first distance increases. As described with reference to FIGS. 16 and 17, the specific number may be determined as follows: if the first distance is smaller than a first threshold distance, the specific number is N1; if the first distance is greater than or equal to the first threshold distance but smaller than a second threshold distance, the specific number is N2; if the first distance is greater than or equal to the second threshold distance but smaller than a third threshold distance, the specific number is N3; and if the first distance is greater than or equal to the third threshold distance, the specific number is N4. Here, the first threshold distance, second threshold distance, and third threshold distance are progressively larger distances, while N1, N2, N3, and N4 are progressively smaller numbers. The first threshold distance, second threshold distance, and third threshold distance may be preconfigured based on at least one of a satellite coverage and a GNSS error range. Alternatively, the request message may correspond to the third message described with reference to FIGS. 11 to 17. Additionally, the request message may be a CSR type of message.

Alternatively, the request message may be transmitted based on configuration information related to message transmission. For example, the first device may select or determine transmission resources for the transmission of the request message based on the configuration information and transmit the request message on the transmission resources. Here, the configuration information may include configuration information on SL communication (hereinafter referred to as first configuration information) and/or configuration information on UL communication (hereinafter referred to as second configuration information). Here, the first configuration information is configuration information related to SL communication and may include configuration information on an SL signal as illustrated in FIGS. 6 to 8. For example, the first configuration information may include information about a resource pool for transmitting and receiving the SL signal, a transmission power control parameter, subchannels, maximum/minimum MCS levels, a channel busy ratio (CBR) range, a transmission parameter for each CBR range, a threshold speed, and so on. The second configuration information is configuration information related to transmission and reception of a UL signal and may include information on a subcarrier spacing, a resource block size, a transmission power control parameter, and a frequency band related to the UL signal.

For example, if the request message is based on SL communication, the first device may transmit the request message based on the first configuration information. In this case, the request message may be transmitted based on at least one of a PSCCH and a PSSCH. For instance, the first device may transmit the PSCCH (or first SCI) to schedule the transmission of the request message. When the PSCCH and/or first SCI is received, the request message (and/or second SCI) may be transmitted via the PSSCH. Alternatively, the first device may receive information about the first SCI and/or second SCI from the first UE. Based on the first SCI and/or the second SCI, the first UE message, the second UE message, and/or the response message may be received. Here, the request message and/or the response message may be transmitted and/or received based on the structure and/or content of the message described with reference to FIGS. 16 and 17.

Next, the first device may receive from the first UE the response message that includes satellite information on the specific number of satellite IDs (S205). The first device may compare the satellite information included in the response message with the satellite information observable based on the first location information to determine whether the first location information is forged or manipulated. For example, the first device may have pre-stored information about the first satellite IDs that are observable in relation to the first location information. Based on whether second satellite IDs included in the response message match the first satellite IDs, the first device may verify whether the first location information is forged and/or manipulated. For example, if the second satellite IDs match the first satellite IDs, the first device may determine that the first location information is not forged. On the other hand, if the first satellite IDs do not match the second satellite IDs, the first device may determine that the first location information is forged.

Alternatively, the response message may further include values related to GNSS raw measurement data in response to the request message. In this case, the first device may additionally consider whether a PTV value converted from the GNSS raw measurement data corresponds to the first location information to verify whether the first location information is forged and/or manipulated.

FIG. 19 is a diagram for explaining a method by which a first UE transmits a message related to verification of location information to a first device.

Referring to FIG. 19, the first UE may transmit a first UE message to the first device (S301). Here, the first UE message may correspond to the aforementioned first message. Additionally, the first UE message may further include mobility information related to the first UE (e.g., heading direction, speed, etc.).

The first UE may receive from the first device a request message requesting transmission of additional information related to verification of first location information (S303). Specifically, the first UE may receive from the first device the request message requesting the first UE to transmit information about a specific number of satellite IDs as the additional information. The specific number may be determined based on a first distance between the first location information and second location information. Here, the second location information may be location information on the first UE based on sensing information included in a second UE message from another UE as described above. Alternatively, the second information may be location information on the first UE obtained based on GNSS raw data included in a separate message transmitted by the first UE. For example, as described with reference to FIGS. 16 and 17, the specific number may be determined based on a comparison between the first distance and a preconfigured threshold distance.

Next, the first UE may transmit to the first device a response message that includes satellite information on the specific number of satellite IDs (S305). Alternatively, the response message may further include values related to GNSS raw measurement data in response to the request message. As described above, the satellite information included in the response message may be used as information to verify whether the first location information is forged and/or manipulated.

Alternatively, the response message may be transmitted based on configuration information related to message transmission. For example, the first UE may select or determine transmission resources for the transmission of the request message based on the configuration information and transmit the request message on the transmission resources. Here, as described with reference to FIG. 17, the configuration information may include first configuration information and/or second configuration information.

### Communication system example to which the present disclosure is applied

Although not limited thereto, various descriptions, functions, procedures, proposals, methods, and/or operational flow charts of the present disclosure disclosed in this document may be applied to various fields requiring wireless communication/connection (5G) between devices.

Hereinafter, it will be illustrated in more detail with reference to the drawings. In the following drawings/description, the same reference numerals may exemplify the same or corresponding hardware blocks, software blocks, or functional blocks, unless otherwise indicated.

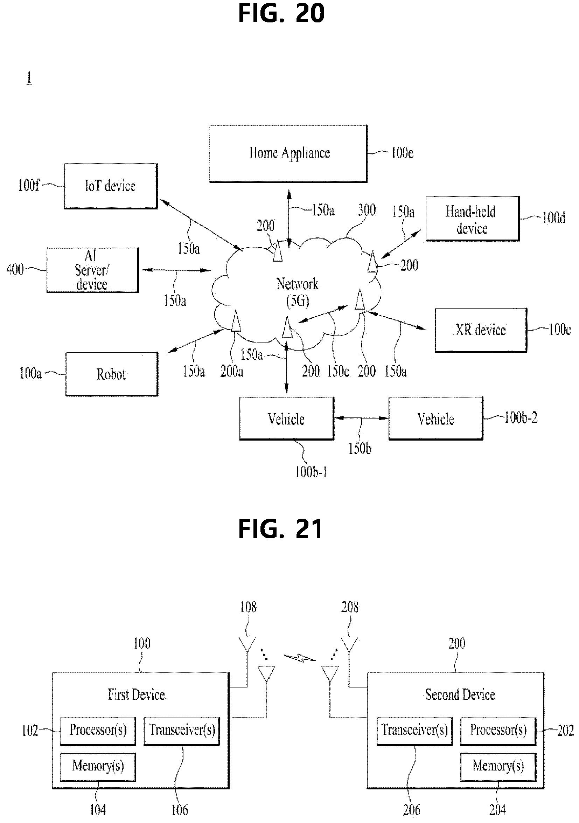

FIG. 20 illustrates a communication system applied to the present disclosure.

Referring to FIG. 20, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul(IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

### Examples of wireless devices to which the present disclosure is applied

FIG. 21 illustrates a wireless device applicable to the present disclosure.

Referring to FIG. 21, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 20.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information acquired by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

Specifically, the first wireless device 100 may be an RSU equipped with a V2X communication module or a first device, which is a soft V2X server. The first wireless device 100 may include the processor(s) 102 connected to the RF transceiver(s) and the memory(s) 104. The memory(s) 104 may include at least one program for performing operations related to the embodiments described above with reference to FIGS. 11 to 19.

Specifically, the processor(s) 102 may control the transceiver(s) 106 to receive a first UE message including first location information, receive a second UE message including second location information, determine the verification of second location information based on the first UE message and the second UE message, and transmit a request message requesting transmission of information on a specific number of satellite IDs based on the verification determination of the second location information. The request message is transmitted based on configuration information that includes first configuration information on an SL signal or second configuration information on a UL signal. The first configuration information includes information on a resource pool for transmitting and receiving the sidelink signal, a transmission power control parameter, and subchannels. The second configuration information includes information on a subcarrier spacing, a resource block size, a transmission power control parameter, and a frequency band. The request message is transmitted based on an inconsistency between the first location information and the second location information, and the request message requests transmission of a response message including information on the specific number of satellite IDs. The specific number may be determined based on a first distance between the first location information and the second location information.

Alternatively, a chipset including the processor(s) 102 and the memory(s) 104 may be configured. The chipset may include: at least one processor; and at least one memory operably connected to the at least one processor and configured to, when executed, cause the at least one processor to perform operations. The operations may include: receiving a first UE message including first location information; acquiring second location information on the first UE; transmitting a request message to the first UE; and receiving a response message in response to the request message. The request message is transmitted based on configuration information including first configuration information on an SL signal or second configuration information on a UL signal. The first configuration information includes information on a resource pool for transmitting and receiving the SL signal, a transmission power control parameter, and subchannels, and the second configuration information includes information on a subcarrier spacing, a resource block size, a transmission power control parameter, and a frequency band. The request message is transmitted based on an inconsistency between the first location information and the second location information, and the request message requests transmission of the response message including information on a specific number of satellite IDs. The specific number may be determined based on a first distance between the first location information and the second location information.

Alternatively, there is provided a computer-readable storage medium including at least one computer program in a wireless communication system. The at least one computer program is configured to cause at least one processor to perform operations for transmitting a request message, and the at least one computer program is stored on the computer-readable storage medium. The operations may include: receiving a first UE message including first location information from a first UE; acquiring second location information on the first UE; transmitting a request message to the first UE; and receiving a response message in response to the request message. The request message is transmitted based on configuration information including first configuration information on an SL signal or second configuration information on a UL signal. The first configuration information includes information on a resource pool for transmitting and receiving the SL signal, a transmission power control parameter, and subchannels, and the second configuration information includes information on a subcarrier spacing, a resource block size, a transmission power control parameter, and a frequency band. The request message is transmitted based on an inconsistency between the first location information and the second location information, and the request message requests transmission of the response message including information on a specific number of satellite IDs. The specific number may be determined based on a first distance between the first location information and the second location information.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information acquired by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Specifically, the second wireless device 200 may be a first UE equipped with a V2X communication module. The second wireless device 200 may include the processor(s) 202 connected to the RF transceiver(s) and the memory(s) 204. The memory(s) 204 may include at least one program for performing operations related to the embodiments described above with reference to FIGS. 11 to 19.

The processor(s) 202 selects first transmission resources based on configuration information, transmits a first UE message including first location information on the first transmission resources, receives from a first device a request message requesting transmission of satellite information on a specific number of satellite IDs, and transmits a response message including the satellite information. The configuration information includes first configuration information on an SL signal or second configuration information on a UL signal. The first configuration information includes information on a resource pool for transmitting and receiving the SL signal, a transmission power control parameter, and subchannels, and the second configuration information includes information on a subcarrier spacing, a resource block size, a transmission power control parameter, and a frequency band. The specific number may be determined based on a first distance between the first location information and the second location information.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

### Examples of wireless devices to which the present disclosure is applied

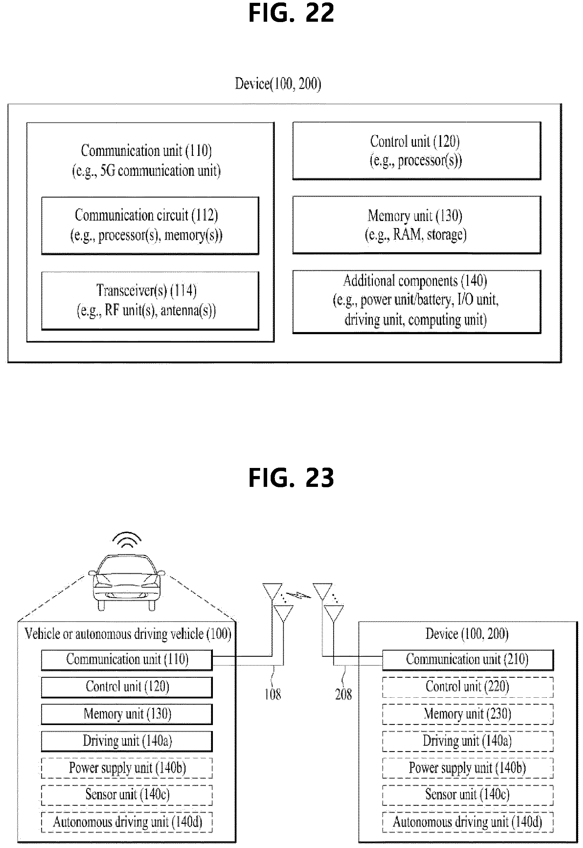

FIG. 22 illustrates another example of a wireless device applied to the present disclosure. The wireless device may be implemented in various forms according to a use-case/service (refer to FIG. 20).

Referring to FIG. 22, wireless devices 100 and 200 may correspond to the wireless devices 100 and 200 of FIG. 21 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 21. For example, the transceiver(s) 114 may include the one or more transceivers 106 and 206 and/or the one or more antennas 108 and 208 of FIG. 21. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 20), the vehicles (100b-1 and 100b-2 of FIG. 20), the XR device (100c of FIG. 20), the hand-held device (100d of FIG. 20), the home appliance (100e of FIG. 20), the IoT device (100f of FIG. 20), a digital broadcast terminal, a hologram device, a public safety device, an MTC device, a medicine device, a fintech device (or a finance device), a security device, a climate/environment device, the AI server/device (400 of FIG. 20), the BSs (200 of FIG. 20), a network node, etc. The wireless device may be used in a mobile or fixed place according to a use-example/service.

In FIG. 22, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

### Examples of vehicles or autonomous vehicles to which the present disclosure is applied

FIG. 23 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 23, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 22, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). Also, the driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the acquired data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly acquired data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

Here, wireless communication technologies implemented in the wireless devices (XXX, YYY) of the present specification may include LTE, NR, and 6G, as well as Narrowband Internet of Things for low power communication. At this time, for example, the NB-IoT technology may be an example of a Low Power Wide Area Network (LPWAN) technology, and may be implemented in standards such as LTE Cat NB1 and/or LTE Cat NB2, and is not limited to the above-described names. Additionally or alternatively, the wireless communication technology implemented in the wireless devices (XXX, YYY) of the present specification may perform communication based on LTE-M technology. In this case, as an example, the LTE-M technology may be an example of LPWAN technology, and may be referred to by various names such as eMTC (enhanced machine type communication). For example, LTE-M technology may be implemented in at least one of a variety of standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described names. Additionally or alternatively, the wireless communication technology implemented in the wireless devices (XXX, YYY) of the present specification is at least one of ZigBee, Bluetooth, and Low Power Wide Area Network (LPWAN) considering low power communication, and is not limited to the above-described names. As an example, ZigBee technology may generate personal area networks (PANs) related to small/low-power digital communication based on various standards such as IEEE 802.15.4, and may be called various names.

The embodiments described above are those in which components and features of the present disclosure are combined in a predetermined form. Each component or feature should be considered optional unless explicitly stated otherwise. Each component or feature may be implemented in a form that is not combined with other components or features. In addition, it is also possible to constitute an embodiment of the present disclosure by combining some components and/or features. The order of operations described in the embodiments of the present disclosure may be changed. Some configurations or features of one embodiment may be included in other embodiments, or may be replaced with corresponding configurations or features of other embodiments. It is obvious that the embodiments may be configured by combining claims that do not have an explicit citation relationship in the claims or may be included as new claims by amendment after filing.

In this document, embodiments of the present disclosure have been mainly described based on a signal transmission/reception relationship between a terminal and a base station. Such a transmission/reception relationship is extended in the same/similar manner to signal transmission/reception between a terminal and a relay or a base station and a relay. A specific operation described as being performed by a base station in this document may be performed by its upper node in some cases. That is, it is obvious that various operations performed for communication with a terminal in a network comprising a plurality of network nodes including a base station may be performed by the base station or network nodes other than the base station. The base station may be replaced by terms such as a fixed station, a Node B, an eNode B (eNB), an access point, and the like. In addition, the terminal may be replaced with terms such as User Equipment (UE), Mobile Station (MS), Mobile Subscriber Station (MSS).

In a hardware configuration, the embodiments of the present disclosure may be achieved by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

In a firmware or software configuration, a method according to embodiments of the present disclosure may be implemented in the form of a module, a procedure, a function, etc. Software code may be stored in a memory unit and executed by a processor. The memory unit is located at the interior or exterior of the processor and may transmit and receive data to and from the processor via various known means.

As described before, a detailed description has been given of preferred embodiments of the present disclosure so that those skilled in the art may implement and perform the present disclosure. While reference has been made above to the preferred embodiments of the present disclosure, those skilled in the art will understand that various modifications and alterations may be made to the present disclosure within the scope of the present disclosure.

### INDUSTRIAL APPLICABILITY

The above-described embodiments of the present disclosure are applicable to various mobile communication systems.

## Claims

1. A method of transmitting a request message by a first device in a wireless communication system, the method comprising:
receiving a first user equipment (UE) message including first location information from a first UE;
acquiring second location information on the first UE;
transmitting the request message to the first UE; and
receiving a response message in response to the request message,
wherein the request message is transmitted based on configuration information including first configuration information on a sidelink signal or second configuration information on an uplink signal,
wherein the first configuration information includes information on a resource pool for transmitting and receiving the sidelink signal, a transmission power control parameter, and subchannels,
wherein the second configuration information includes information on a subcarrier spacing, a resource block size, a transmission power control parameter, and a frequency band,
wherein the request message is transmitted based on an inconsistency between the first location information and the second location information,
wherein the request message requests transmission of the response message including information on a specific number of satellite identifiers, and
wherein the specific number is determined based on a first distance between the first location information and the second location information.

2. The method of claim 1, wherein the specific number is determined as a first number or a second number based on the first distance and a preconfigured threshold distance.

3. The method of claim 2, wherein the specific number is determined as the first number based on that the first distance is smaller than the preconfigured threshold distance,
wherein the specific number is determined as the second number based on that the first distance is greater than or equal to the preconfigured threshold distance, and
wherein the first number is greater than the second number.

4. The method of claim 2, wherein the preconfigured threshold distance is preconfigured based on at least one of a satellite coverage and a measurement error range of a global navigation satellite system (GNSS).

5. The method of claim 1, wherein the second location information is acquired based on first sensing information included in a second UE message transmitted by a second UE or global navigation satellite system (GNSS) raw measurement data included in a third UE message transmitted by the first UE.

6. The method of claim 1, wherein the first device verifies whether the first location information is manipulated, depending on whether the satellite identifiers included in the response message match satellite identifiers observed based on the first location information.

7. The method of claim 1, wherein the response message further includes a value related to global navigation satellite system (GNSS) raw measurement data.

8. The method of claim 7, wherein the first device verifies whether the first location information is manipulated by further considering whether a position-velocity-time (PTV) value converted from the GNSS raw measurement data corresponds to the first location information.

9. The method of claim 1, wherein the request message is a common safety request (CSR) type of message.

10. A method of transmitting a message by a first user equipment (UE) in a wireless communication system, the method comprising:
selecting first transmission resources based on configuration information;
transmitting a first UE message including first location information on the first transmission resources;
receiving from a first device a request message requesting transmission of satellite information on a specific number of satellite identifiers; and
transmitting a response message including the satellite information,
wherein the configuration information includes first configuration information on a sidelink signal or second configuration information on an uplink signal,
wherein the first configuration information includes information on a resource pool for transmitting and receiving the sidelink signal, a transmission power control parameter, and subchannels,
wherein the second configuration information includes information on a subcarrier spacing, a resource block size, a transmission power control parameter, and a frequency band, and
wherein the specific number is determined based on a first distance between the first location information and the second location information.

11. A first device configured to transmit a request message in a wireless communication system, the first device comprising:
a radio frequency (RF) transceiver; and
a processor connected to the RF transceiver,
wherein the processor is configured to:
control the RF transceiver to receive a first user equipment (UE) message including first location information from a first UE;
acquire second location information on the first UE;
transmit the request message to the first UE; and
receive a response message in response to the request message,
wherein the request message is transmitted based on configuration information including first configuration information on a sidelink signal or second configuration information on an uplink signal,
wherein the first configuration information includes information on a resource pool for transmitting and receiving the sidelink signal, a transmission power control parameter, and subchannels,
wherein the second configuration information includes information on a subcarrier spacing, a resource block size, a transmission power control parameter, and a frequency band,
wherein the request message is transmitted based on an inconsistency between the first location information and the second location information,
wherein the request message requests transmission of the response message including information on a specific number of satellite identifiers, and
wherein the specific number is determined based on a first distance between the first location information and the second location information.

12. A first user equipment (UE) configured to transmit a response message in a wireless communication system, the first UE comprising:
a radio frequency (RF) transceiver; and
a processor connected to the RF transceiver,
wherein the processor is configured to:
select first transmission resources based on configuration information;
transmit a first UE message including first location information on the first transmission resources;
receive from a first device a request message requesting transmission of satellite information on a specific number of satellite identifiers; and
transmit a response message including the satellite information,
wherein the configuration information includes first configuration information on a sidelink signal or second configuration information on an uplink signal,
wherein the first configuration information includes information on a resource pool for transmitting and receiving the sidelink signal, a transmission power control parameter, and subchannels,
wherein the second configuration information includes information on a subcarrier spacing, a resource block size, a transmission power control parameter, and a frequency band, and
wherein the specific number is determined based on a first distance between the first location information and the second location information.

13. A chipset configured to transmit a request message in a wireless communication system, the chipset comprising:
at least one processor; and
at least one memory operably connected to the at least one processor and configured to, when executed, cause the at least one processor to perform operations comprising:
receiving a first user equipment (UE) message including first location information from a first UE;
acquiring second location information on the first UE;
transmitting the request message to the first UE; and
receiving a response message in response to the request message,
wherein the request message is transmitted based on configuration information including first configuration information on a sidelink signal or second configuration information on an uplink signal,
wherein the first configuration information includes information on a resource pool for transmitting and receiving the sidelink signal, a transmission power control parameter, and subchannels,
wherein the second configuration information includes information on a subcarrier spacing, a resource block size, a transmission power control parameter, and a frequency band,
wherein the request message is transmitted based on an inconsistency between the first location information and the second location information,
wherein the request message requests transmission of the response message including information on a specific number of satellite identifiers, and
wherein the specific number is determined based on a first distance between the first location information and the second location information.

14. A computer-readable storage medium comprising at least one computer program in a wireless communication system,
wherein the at least one computer program is configured to cause at least one processor to perform operations for transmitting a request message,
wherein the at least one computer program is stored on the computer-readable storage medium,
wherein the operations comprise:
receiving a first user equipment (UE) message including first location information from a first UE;
acquiring second location information on the first UE;
transmitting the request message to the first UE; and
receiving a response message in response to the request message,
wherein the request message is transmitted based on configuration information including first configuration information on a sidelink signal or second configuration information on an uplink signal,
wherein the first configuration information includes information on a resource pool for transmitting and receiving the sidelink signal, a transmission power control parameter, and subchannels,
wherein the second configuration information includes information on a subcarrier spacing, a resource block size, a transmission power control parameter, and a frequency band,
wherein the request message is transmitted based on an inconsistency between the first location information and the second location information,
wherein the request message requests transmission of the response message including information on a specific number of satellite identifiers, and
wherein the specific number is determined based on a first distance between the first location information and the second location information.

15. A method of transmitting a request message by a first device in a wireless communication system, the method comprising:
receiving a first user equipment (UE) message including first location information from a first UE;
acquiring second location information on the first UE; and
transmitting the request message to the first UE,
wherein the request message is transmitted based on configuration information including first configuration information on a sidelink signal or second configuration information on an uplink signal,
wherein the first configuration information includes information on a resource pool for transmitting and receiving the sidelink signal, a transmission power control parameter, and subchannels,
wherein the second configuration information includes information on a subcarrier spacing, a resource block size, a transmission power control parameter, and a frequency band,
wherein the second location information is acquired based on satellite information related to the first location information provided by the first UE,
wherein an acquisition cycle of the second location information is longer than a transmission cycle of the first UE message, and
wherein the request message is transmitted based on an inconsistency between the first location information and the second location information.
